# EUROPEAN PATENT SPECIFICATION

(11) **EP 4 476 811 B1**
(45) Date of publication and mention of the grant of the patent: **08.07.2026**
(21) Application number: 23705639.5
(22) Date of filing: 07.02.2023
(51) Int. Cl.: H02K 1/16, H02K 29/03, H02K 3/48, H02K 3/493, H02K 3/24, H02K 9/19

(54) **STATOR FOR AN ELECTRIC MACHINE**
STATOR FÜR EINE ELEKTRISCHE MASCHINE
STATOR POUR UNE MACHINE ÉLECTRIQUE

(30) Priority: 07.02.2022 GB 202201558
(43) Date of publication of application: 18.12.2024
(60) Divisional application: 26181473.5
(73) Proprietor: Hispeed Ltd., Bicester, Oxfordshire OX27 8FZ (GB)
(72) Inventor: CESA, Tiago, Bicester Oxfordshire OX27 8FZ (GB); THACKWELL, Cleef, Bicester Oxfordshire OX27 8FZ (GB); MICHAELIDES, Alexandros, Bicester Oxfordshire OX27 8FZ (GB)
(74) Representative: Ellis, Richard Andrew
(86) International application number: PCT/GB2023/050271
(87) International publication number: WO 2023/148512

(56) References cited:
- CN-A- 111 463 917
- FR-A1- 3 112 905
- JP-A- 2000 350 391
- JP-A- 2002 142 391
- JP-A- 2003 088 011
- JP-A- 2004 215 476
- JP-A- 2015 050 863
- JP-B2- 4 397 598
- JP-B2- 4 476 202
- US-A1- 2018 115 202
- US-A1- 2021 111 594
- US-A1- 2021 203 197
- US-B2- 10 855 121

## Description

### TECHNICAL FIELD

The present disclosure relates to a stator for an electric machine. In particular, but not exclusively, it relates to a stator for an electric machine used as a propulsion motor and/or generator for a vehicle.

Aspects of the invention relate to a stator, an electric machine, a vehicle, and method of manufacture of a stator.

### BACKGROUND

It is known to provide one or more electric machines in a vehicle to generate a tractive force for propelling the vehicle. Such electric machines may be provided in addition to an internal combustion engine or in place of an internal combustion engine. Such electric machines comprise a stator and a rotor. The stator is the stationary part of the electric machine and may comprise a plurality of stator teeth, between which are slots within which windings are placed.

In some electric machines the slots of the stator are open to the air gap between the stator and the rotor. During manufacture of the electric machine, the open slots allow the windings to be inserted but may cause non-negligible electromagnetic disturbances during operation of the electric machine.

In some electric machines the stator is in two parts, the first part being an inner ring having slots to receive windings which are closed in the direction of the air gap, but open radially outwards for insertion of the windings. During manufacture, once the windings have been inserted into the slots, an outer ring forming a stator yoke is attached around the outside of the inner ring.

JP4476202B2 discloses a permanent magnet rotary motor in which cogging torque can be reduced without largely reducing the torque. When an angle formed between two virtual lines respectively connecting a center of a rotary shaft and both ends of a first type connecting portion is defined as a first angle and an angle formed between two virtual lines connecting the center of the rotary shaft and both ends of a second type connecting portion is defined as a second angle. A through-hole is formed in the first type connecting portion, which extends from a center position of the first type connecting portion as viewed in an axial direction of the rotary shaft toward both sides in the axial direction. A through-hole is formed in the second type connecting portion, which extends from a center position of the second type connecting portion as viewed in the axial direction toward both sides in the axial direction. The length, in a circumferential direction, of the through-hole formed in the first type connecting portion is longer than the length, in the circumferential direction, of the through-hole formed in the second type connecting portion. The length, in the axial direction, of the through-hole formed in the first type connecting portion is shorter than a length, in the axial direction, of the through-hole formed in the second type connecting portion.

JP2003088011A discloses a brushless motor which delivers high output without increase in the body size thereof, being formed such that the relation expressed as P=14n and T=12n, where n is an integer not less than 1, holds between the number of poles P of a magnet and the number of teeth T. In the motor thus constituted, the teeth are allocated in succession two by two to phase U, phase V, and phase W. The center angle θ1 between ones of the pairs of the teeth allocated to each phase is so set as to satisfy θ1=(160 deg.×2/T). The positions of the teeth are determined so that the center angle θ2 of the others of the pairs of the teeth fall within the range of (360 deg./P) < =θ2 < (360 deg./T).

JP2002142391A discloses a stator iron core formed in a closed slot core, where the end part of each tooth is provided with a coupling part for coupling the adjacent teeth and is therefore formed in a structure with a plurality of grooves arranged in different intervals in the circumferential direction to the coupling part. Since the stator iron core is the closed slot core, cogging torque can be lowered in comparison with the open slot core, and moreover the groove of the coupling part is disposed in different intervals in the circumferential direction. As a result, the cogging torque generated at each slot can be dispersed to reduce the whole cogging torque.

US2021/111594A1 discloses a stator for an electric machine having a plurality of radially extending teeth, supported by an outer annular yoke radial to the teeth, at least part of the teeth supporting a coil and the outer annular yoke having flutes of partially cylindrical shape opening towards the teeth, at least part of the teeth each having, at their end, on the side of the outer annular yoke, a protuberance of partially cylindrical shape, the protuberance being held in the flute by contact points so that at least one part of the teeth performs a relative movement having a degree of rotational and/or translational freedom relative to the annular yoke.

US2021/203197A1 discloses a stator for a rotary electrical machine including a radially interior ring having teeth and slots which are open radially toward the outside, extending between the teeth, bridges of material connecting two adjacent teeth at their base, and defining the bottom of the slot between these teeth, and a radially exterior yoke, attached in contact with the ring, the ring and the yoke respectively exhibiting first and second reliefs collaborating with one another and/or with one or more inserts, and windings placed in a distributed fashion in the slots.

US2018/115202A1 discloses a rotary electric machine having a plurality of core sheets including linked core sheets that include linking portions that protrude circumferentially from flange portions so as to link together tip portions of adjacent tooth portions, at least one sheet of the linked core sheets is formed such that a tooth tip portion shape is mirror-asymmetrical relative to a tooth central axis that passes through a circumferential center of the tooth portions, and a stator core is configured by laminating the linked core sheets such that circumferential positions of the linking portions are offset.

US10855121B2 discloses a rotary electric machine capable of reducing an amount of leakage magnetic flux passing through connecting portions. A cutout portion is formed in the connecting portion so as to be located on a side closer to a magnetic air gap portion. The connecting portion has a slot portion-side thin connecting portion formed so as to be closer to a slot portion than the cutout portion. A slot projecting portion projecting from the slot portion toward the magnetic air gap portion with respect to the slot portion-side thin connecting portion is formed in a portion of the connecting portion that is shifted in the circumferential direction from a portion of the connecting portion in which the slot portion-side thin connecting portion is formed. The slot projecting portion is arranged on each of circumferential sides of the cutout portion.

It is an aim of the present invention to address at least some of the disadvantages associated with the prior art.

### SUMMARY OF THE INVENTION

Aspects and embodiments of the invention provide a stator, an electric machine, a vehicle, and method of manufacture of a stator, as claimed in the appended claims.

According to an aspect of the invention there is provided a stator comprising: an inner ring, the inner ring comprising a plurality of radially projecting teeth and a plurality of material bridges, the radially projecting teeth and material bridges being formed from the same sheet lamina, each tooth being connected to adjacent teeth by respective material bridges at radially inner ends of the teeth, and being separated from the adjacent teeth by respective slots, wherein the slots of the inner ring are open at radially outer ends of the teeth; and an outer ring, the outer ring located at the radially outer ends of the teeth; wherein at least some of the material bridges are asymmetric in shape; and wherein each asymmetric material bridge comprises a first portion comprising a first surface inside the slot extending from a first one of the teeth towards a second one of the teeth, a second portion comprising a second surface inside the slot extending from the second one of the teeth towards the first one of the teeth, and a third portion extending from the first portion to the second portion wherein the third portion comprises a third surface between the first surface and the second surface, wherein the first surface is radially separated from the second surface, the first surface providing an upper step, configured to support windings in use, and the second surface providing a lower step, configured to be separated from the windings in use, thereby forming a cooling channel in the asymmetric material bridge.

An advantage of the invention is that torque ripple and rotor loss can be controlled whilst providing further mechanical features which are advantageous in the manufacture and operation of the stator; these include added stiffness to the inner ring, as well as a first winding or conductor locator and an associated coolant or oil gulley. A further advantage of the invention is that a stepped arrangement is provided which provides an upper step acting as a locator or rest for stator windings nearest the air gap and a gap between the windings and the lower step which may be used to provide cooling to the windings, for example by providing an oil gulley for the passage of oil between the winding nearest the air gap and the material bridge.

All of the material bridges may be asymmetric in shape. An advantage of this feature is that the stator is uniform around the whole circumference leading to potentially more uniform control of flux.

The radially outer end of each tooth may have, at least in part, a semi-elliptical surface. An advantage of this feature is that it provides smooth edges which are beneficial in the stator manufacturing process to avoid damage to the windings when inserting the windings in the slots and to help position the windings in the slots.

The semi-elliptical surface may have a first diameter D, with ends which are contiguous with a respective surface of the radially projecting tooth. The semi-elliptical surface may have a second diameter d in a range from 0.05D to 2D.

The radially outer end of each tooth may comprise an indentation in the semi-elliptical surface. An advantage of this feature is that the indentation provides an additional location or retention feature for the outer ring.

The indentation may comprise a flat surface in a central portion of the radially outer end of the tooth.

The stator may comprise an inner portion comprising a plurality of inner rings, wherein each of the radially projecting teeth on each of the inner rings overlay corresponding radially projecting teeth on each adjacent inner ring, forming elongate radially projecting teeth and elongate slots in the inner portion of the stator.

The stator may comprise windings located in the elongate slots of the inner portion of the stator.

The stator may comprise an outer portion comprising a plurality of outer rings.

The outer ring may comprise a plurality of tooth receiving formations.

Each of the tooth receiving formations on each of the outer rings may overlay corresponding tooth receiving formations on each adjacent outer ring, forming elongate tooth receiving formations in the outer portion of the stator.

According to an aspect of the invention there is provided an electric machine comprising a stator according to any previous aspect and a rotor.

A thinner portion of each of the asymmetric material bridges may be located, in use, at the leading edge of the respective asymmetric material bridges in the direction of rotation of the rotor. An advantage of this feature is that torque ripple and rotor iron loss can be reduced when compared to a stator with symmetric material bridges. Torque ripple defines the periodic increase or decrease in output torque as the motor shaft rotates displaying as speed oscillations, which are potentially detrimental in electric machine operation. The torque ripple is measured as the difference in maximum and minimum torque over one complete revolution, generally expressed as a percentage. The rotor iron losses comprise hysteresis and eddy current losses which induce potentially detrimental joule heating.

According to an aspect of the invention there is provided a vehicle comprising one or more electric machines according to any preceding aspect.

According to an aspect of the invention there is provided a method of manufacture of a stator comprising: stamping a stator lamina ring to form an inner ring and an outer ring, the inner ring comprising a plurality of radially projecting teeth and a plurality of material bridges, the radially projecting teeth and material bridges being formed from the same sheet lamina, each tooth being connected to adjacent teeth by respective material bridges at radially inner ends of the teeth, and being separated from the adjacent teeth by respective slots, wherein the slots of the inner ring are open at radially outer ends of the teeth; wherein at least some of the material bridges are asymmetric in shape; and wherein each asymmetric material bridge comprises a first portion comprising a first surface inside the slot extending from a first one of the teeth towards a second one of the teeth, a second portion comprising a second surface inside the slot extending from the second one of the teeth towards the first one of the teeth, and a third portion extending from the first portion to the second portion wherein the third portion comprises a third surface between the first surface and the second surface, wherein the first surface is radially separated from the second surface, the first surface providing an upper step, configured to support windings in use, and the second surface providing a lower step, configured to be separated from the windings in use, thereby forming a cooling channel in the asymmetric material bridge.

The radially outer end of each tooth may have, at least in part, a semi-elliptical surface.

The radially outer end of each tooth may comprise an indentation in the semi-elliptical surface.

The indentation may comprise a flat surface in a central portion of the radially outer end of the tooth.

The method may comprise stamping tooth receiving formations in the outer ring, corresponding to the shape of radially outer ends of the teeth of the inner ring, the tooth receiving formations being stamped in between formations in the outer ring which are formed by the stamping of the radially outer ends of the teeth of the inner ring from the stator lamina ring.

The method may comprise joining a plurality of inner rings together to form an inner portion of the stator, where each of the radially projecting teeth on each of the inner rings overlay corresponding radially projecting teeth on each adjacent inner ring, forming elongate radially projecting teeth and elongate slots in the inner portion of the stator.

The method may comprise inserting windings into the elongate slots of the inner portion of the stator.

The method may comprise joining a plurality of outer rings together to form an outer portion of the stator, where each of the tooth receiving formations on each of the outer rings overlay corresponding tooth receiving formations on each adjacent outer ring, forming elongate tooth receiving formations in the outer portion of the stator.

The method may comprise orienting the inner portion of the stator such that the elongate radially projecting teeth are positioned in the elongate tooth receiving formations in the outer portion of the stator.

The method may comprise stamping the stator lamina ring from a sheet of steel material, the stator lamina ring having a circular inner surface and a substantially circular outer surface.

Within the scope of this application, it is expressly intended that the various aspects, embodiments, examples, and alternatives, set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 illustrates a cross sectional image of a stator according to an embodiment of the invention;
Figure 2 illustrates a side view of a stator according to an embodiment of the invention;
Figure 3 illustrates a cross sectional image of an electric machine according to an embodiment of the invention;
Figure 4 illustrates a magnified view of the cross sectional image of a stator component of the electric machine shown in figure 3 according to an embodiment of the invention;
Figure 5 illustrates a magnified view of material bridges of the stator shown in figure 4 according to an embodiment of the invention;
Figure 6 illustrates a magnified view of a cross sectional image of a stator component of an electric machine according to an embodiment of the invention;
Figure 7 illustrates a magnified view of material bridges of the stator shown in figure 6 according to an embodiment of the invention;
Figure 8 illustrates a magnified view of a cross sectional image of a stator component of an electric machine according to an embodiment of the invention;
Figure 9 illustrates a magnified view of material bridges of the stator shown in figure 8 according to an embodiment of the invention;
Figure 10 illustrates a magnified view of a cross sectional image of a stator component of an electric machine according to an embodiment of the invention;
Figure 11 illustrates a magnified view of material bridges of the stator shown in figure 10 according to an embodiment of the invention;
Figure 12 illustrates a magnified view of a cross sectional image of a stator component of an electric machine according to an embodiment of the invention;
Figure 13 illustrates a magnified view of material bridges of the stator shown in figure 12 according to an embodiment of the invention;
Figure 14 illustrates a partial cross sectional image of a stator according to an embodiment of the invention;
Figure 15 illustrates an inner ring of the stator as shown in figure 14;
Figure 16 illustrates an outer ring of the stator as shown in figure 14;
Figure 17 illustrates a stator tooth arrangement according to an embodiment of the invention;
Figure 18 illustrates tooth receiving formations according to an embodiment of the invention;
Figure 19 illustrates a stator tooth arrangement according to an embodiment of the invention;
Figure 20 illustrates tooth receiving formations according to an embodiment of the invention;
Figure 21 illustrates a stator tooth arrangement according to an embodiment of the invention;
Figure 22 illustrates tooth receiving formations according to an embodiment of the invention;
Figure 23 illustrates a stator tooth arrangement according to an embodiment of the invention;
Figure 24 illustrates tooth receiving formations according to an embodiment of the invention;
Figure 25 illustrates a slot formation of a stator according to an embodiment of the invention;
Figure 26 illustrates a slot formation of a stator according to an embodiment of the invention;
Figure 27 illustrates a slot formation of a stator according to an embodiment of the invention;
Figure 28 illustrates a vehicle according to an embodiment of the invention;
Figure 29 is a flow diagram of the manufacturing of a stator according to an embodiment of the invention;
Figure 30 illustrates a stator lamina ring according to an embodiment of the invention;
Figure 31 illustrates the result of a stamping stage in the manufacture of a stator according to an embodiment of the invention;
Figure 32 illustrates an inner ring formed by the stamping stage illustrated in figure 31 according to an embodiment of the invention;
Figure 33 illustrates an outer ring formed by a method according to an embodiment of the invention;
Figure 34 illustrates the result of a stamping stage in the manufacture of a stator according to an embodiment of the invention;
Figure 35 illustrates an inner ring formed by the stamping stage illustrated in figure 34 according to an embodiment of the invention;
Figure 36 illustrates an outer ring formed by a method according to an embodiment of the invention;
Figure 37 illustrates an outer portion of a stator according to an embodiment of the invention;
Figure 38 illustrates a stator according to an embodiment of the invention, manufactured by a method according to an embodiment of the invention.
Figure 39 illustrates a stator according to an embodiment of the invention, manufactured by a method according to an embodiment of the invention; and
Figure 40 illustrates a magnified view of tooth receiving formations in the outer ring

In the drawings, like parts are denoted by like reference numerals.

### DETAILED DESCRIPTION

Examples of the present disclosure relate to a stator. In particular, examples of the present disclosure relate to a multi-part stator. Non-limiting examples will now be described with reference to the accompanying drawings.

The figures illustrate a stator 10, electric machine 72, vehicle 84, and a manufacturing process 200 for a stator. The stator 10 is intended for use in an electric machine 72. Such electric machines 72 may act as a motor, a generator, or both a motor and a generator. In particular, the stator 10 may be intended for use in an electric machine 72 which is suitable for operating as a traction motor of an electric vehicle 84. The electric machine 72 comprises a stationary stator 10 and a moveable rotor 76, where the rotor 76 is configured to rotate in a central cylindrical core of the stator 10, around a central axis 80 of the stator 10, to drive a driveshaft of the electric vehicle 84. The rotor 76 is separated from the stator 10 by a small air gap 74. An electric vehicle 84, such as a car, van, truck, motorbike, aeroplane, or any other transportation means, may incorporate one or more of the electric machines 72, in particular to provide motive force for that vehicle 84.

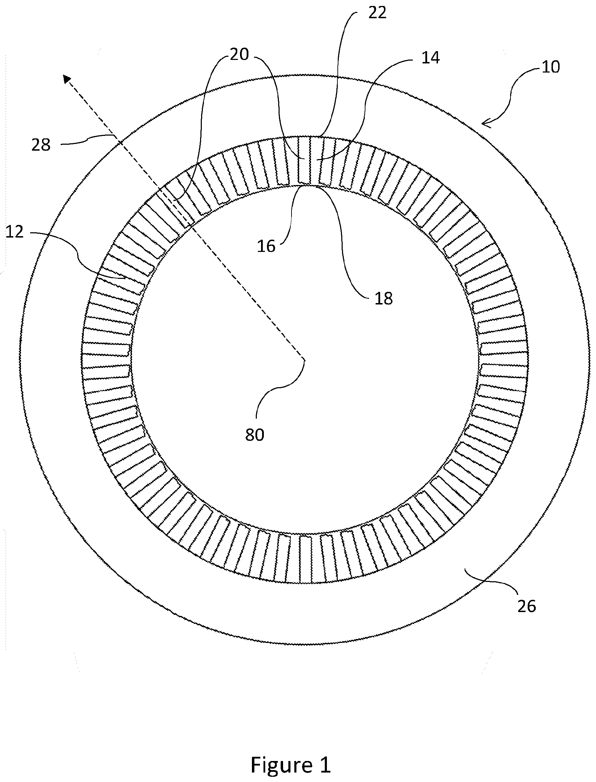

Figure 1 is an illustration of the cross section of a stator 10, the stator 10 being in the form of a two-part stator having an inner ring 12 and an outer ring 26.

The inner ring 12 and the outer ring 26 are concentric around a central stator axis 80. The inner ring 12 comprises a plurality of radially projecting teeth 14 and a plurality of slots 20. The teeth 14 and slots 20 extend along radial axes 28 which project from the central stator axis 80. In figure 1 a single radial axis 28 through one of the slots 20 is illustrated for simplicity. In the illustrated embodiment there are fifty four teeth 14 and a corresponding number of slots 20, though in other arrangements more, or less, teeth 14 may be provided with a corresponding number of slots 20.

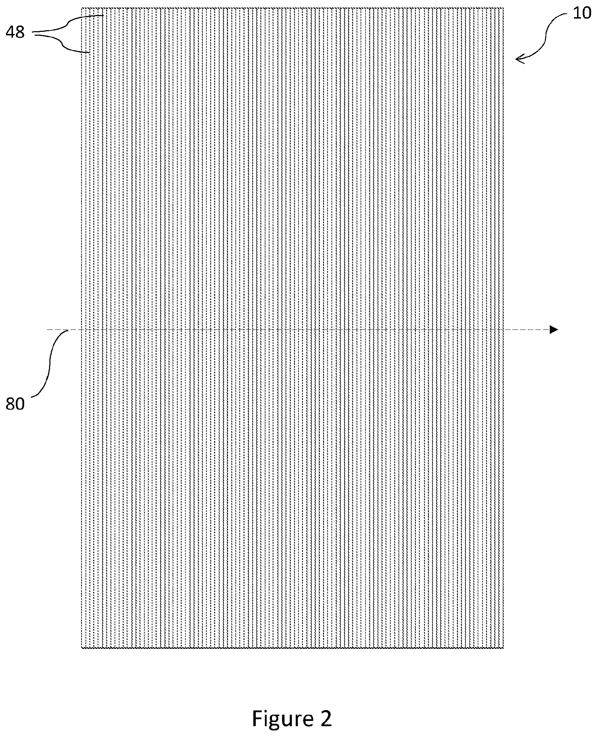

Figure 2 illustrates a side view of a stator 10, where the stator 10 is formed of a plurality of lamina 48, which may be manufactured of electrical steel, such as silicon steel. The plurality of lamina 48 are arranged along the central stator axis 80. The cross section shown in figure 1 may be considered to show an inner ring 12 lamina and an outer ring 26 lamina, forming one lamina 48 of the stator 10 shown in figure 2, wherein a plurality of lamina 48 form the stator 10.

Therefore, each of an inner portion 90 and outer portion 96 of a stator 10 may be formed of cooperating lamina 48, the inner portion 90 being formed of a plurality of inner rings 12 and the outer portion 96 being formed of a plurality of outer rings 26. Each pair of cooperating inner ring 12 lamina 48 and outer ring 26 lamina 48 may be cut from the same base sheet material. Typically, each lamina 48 in the stator 10 is of substantially the same thickness. Stator lamina thickness for a typical electrical machine 72 may be in the range of 0.1 mm to 2 mm thick. For example, each single lamina 48 in the stator 10 may be 0.25 mm thick.

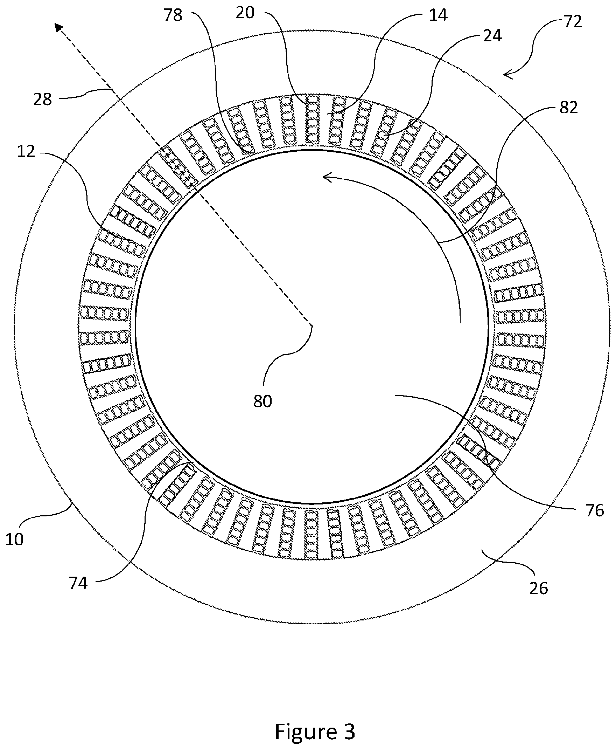

Figure 3 illustrates an electric machine 72 comprising a stator 10 as previously described and a rotor 76, both centred on the central stator axis 80, with the stator 10 and rotor 76 being separated by an air gap 74. In use, the stator 10 remains substantially stationary, whilst the rotor 76 rotates within the central cylindrical core of the stator 10, around the central stator axis 80, to drive, for example, a driveshaft of an electric vehicle 84 in which the electric machine 72 may be located. The rotor 76 rotates in a first direction 82 about the central stator axis 80.

As illustrated in figure 1, each radially projecting or extending tooth 14 of the inner ring 12 comprises a radially inner end 18 of the tooth 14 and a radially outer end 22 of the tooth 14, the radially outer end 22 of the tooth 14 being further from the central stator axis 80 than the radially inner end 18 of the tooth 14. Each tooth 14 is connected to adjacent teeth 14 by respective material bridges 16 at radially inner ends 18 of the teeth 14. That is, the material bridges 16 extend from the radially inner end 18 of one tooth 14 to the radially inner end 18 of an adjacent tooth 14.

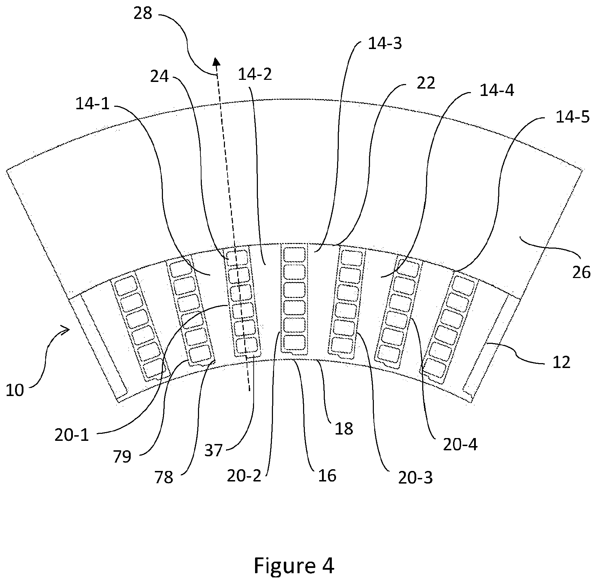

Since the stator 10 comprises an inner ring 12 with teeth 14 and slots 20 extending along radial axes 28 projecting from the central stator axis 80, open to the radially outer end 22 of the teeth 14, the slots 20 in the stator 10, for housing stator, or electrical, windings 24 as illustrated in figures 3 and 4, can be closed to the air gap 74 between the stator 10 and the rotor 76. Although a two-part stator is described, in alternative embodiments a multi-part stator can be provided having more than two parts, for example, by having an outer ring 26 formed of two or more separate sections that can be abutted or joined to form the outer ring 26.

Each tooth 14 is separated from the adjacent teeth 14 by respective slots 20, wherein the slots 20 of the inner ring 12 are open at radially outer ends 22 of the teeth 14. That is, the ends of the slots 20 between radially outer ends 22 of adjacent teeth 14, which are more radially distal from the central axis 80 of the stator 10 than the other ends of the slots 20, are open, allowing the insertion of windings 24 into the slot 20 from a radially outer surface of the inner ring 12. The slots 20 thereby form substantially rectangular apertures for receiving and retaining windings 24 of the stator 10. The material bridges 16 can therefore be considered to bridge the slots 20 between teeth 14.

In figures 3 and 4, the stator comprises the electrical windings 24, located in the slots 20 of the inner ring 12. The windings 24 may be a multi-stranded distributed winding or the windings 24 could be hairpin windings, as shown in figures 3 and 4. Hairpin windings are pre-formed windings of rectangular cross section with greater fill factor than for multi stranded distributed windings. Hairpin windings also provide better thermal performance and allow for a more automated manufacturing process. Hairpin windings may either be axially inserted into the slots, with their ends being joined, for example by welding, or they may be radially inserted into the slots. When radially inserted, a continuous hairpin winding may be used that does not require welding. Since a continuous hairpin winding does not require welding it has improved reliability over axially inserted windings and may lead to much simplified manufacturing of the stator 10. Although figures 3 and 4 illustrate six layers of windings 24, a different number of layers of windings 24 may be present, such as four or eight.

The stator 10 comprises an outer ring 26, the outer ring 26 being located at the radially outer ends 22 of the teeth 14, in order to retain the windings 24 in the slots 20 of the inner ring 12. The inner ring 12 may have an interference fit with the outer ring 26, such that it may be necessary to heat the outer ring 26 to expand the outer ring 26 before inserting the inner ring 12. That is, the outer ring 26 is heated to expand the outer ring 26 before placing the outer ring 26 over the inner ring 12. On cooling, the outer ring 26 then shrinks back in size to provide an interference fit with the inner ring 12.

Radially inserted windings require an open slot 20 in the stator, which can either be a slot opening into the air gap 74 in a single part stator, or via the radially open slots 20 of the inner ring 12 illustrated in figures 1, 3, and 4 where those slots 20 are then closed by the introduction of the outer ring 26 around the outside of the inner ring 12.

In some embodiments, at least some of the material bridges 16 are asymmetric in shape. In particular, the thickness of the material bridges 16 may vary across the bridge length, between one tooth 14 and an adjacent tooth 14 such that one portion of the material bridge 16 may be less than the thickness of another portion of the material bridge 16. In some embodiments one portion of the material bridge 16 may be less than half of the thickness of another portion of the material bridge 16. In one example, the thickness of one portion of the material bridge may be 0.5 mm and another portion of the material bridge may be 2 mm. The material bridge 16 may be stepped from one portion to another portion. In some embodiments less than all of the material bridges 16 of the inner ring 12 of the stator 10 are asymmetric in shape, for example every other material bridge 16 around the inner ring 12 may be asymmetrical, with the other material bridges 16 being symmetrical. In other embodiments one in every three material bridges 16 around the inner ring 12 may be asymmetrical. In other embodiments all of the material bridges 16 are asymmetric in shape. In other embodiments all of the material bridges 16 are symmetrical in shape.

Figure 4 illustrates a magnified view of a portion of figure 3, illustrating the material bridges 16 relating to a series of slots 20-1, 20-2, 20-3, 20-4 and a series of adjacent teeth 14-1, 14-2, 14-3, 14-4, 14-5 more clearly.

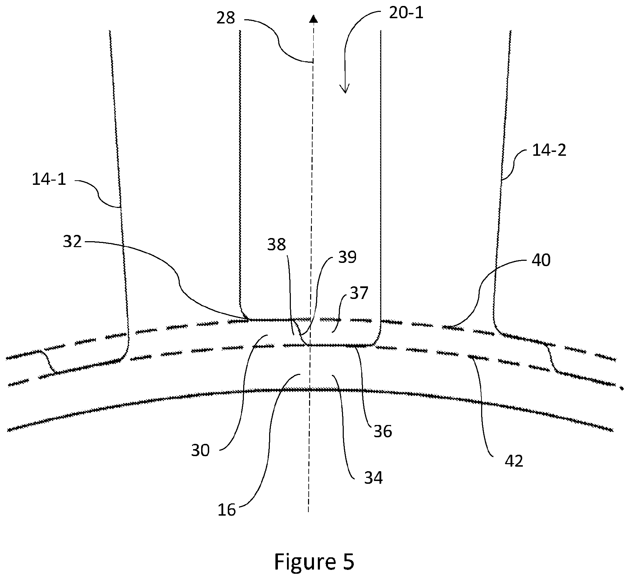

Figure 5 illustrates a magnified view of a portion of figure 1. In this embodiment, each asymmetric material bridge 16 comprises a first portion 30 comprising a first surface 32 inside the slot 20-1 and a second portion 34 comprising a second surface 36 inside the slot 20-1. The first surface 32 is located on, or tangentially to, a first curved plane 40 and the second surface 36 is located on, or tangentially to, a second curved plane 42, where the first curved plane 40 and second curved plane 42 are concentric planes which are radially separated. That is, plane 40 and plane 42 are circular planes. In figure 5 it is observed that, between two adjacent teeth 14-1, 14-2, a first portion 30 comprising a first surface 32 inside the slot 20-1 extends from the first one of the teeth 14-1 towards the second one of the teeth 14-2, and a second portion 34 comprising a second surface 36 inside the slot 20-1 extends from the second one of the teeth 14-2 towards the first one of the teeth 14-1, wherein the first surface 32 is radially separated from the second surface 36. The first surface 32 is more radially distal from the central stator axis 80 of the stator 10 than the second surface 36, such that the thickness of the material bridge 16 at the first surface 32 is larger than the thickness of the material bridge at the second surface 36.

The first surface 32 can be seen to be an upper step upon which the radially inner one of the windings 24 in the slot 20-1 can be positioned, as illustrated in figures 3 and 4. The second surface 36 can be seen to be a lower step which does not contact the radially inner one of the windings 24 in the slot 20-1, as illustrated in figures 3 and 4, thereby creating a gap 37 which may be used as a cooling channel for cooling the windings 24. The gap 37 forming the cooling channel 37 may form part of a fluidic cooling system, whereby a coolant, such as oil, can be passed through the cooling channel 37 in order to transfer heat from the windings 24, and the surrounding stator 10, to the coolant.

Each asymmetric material bridge 16 comprises a third portion 38 extending from the first portion 30 to the second portion 34. The third portion 38 comprises a third surface 39 between the first surface 32 and the second surface 36.

Whilst figure 4 illustrates an arrangement of material bridges 16 where each material bridge 16 is identical to each other material bridge 16, in some embodiments the form of the material bridges 16 of the inner ring 12 of the stator 10 may vary from material bridge 16 to material bridge 16. In these arrangements, adjacent material bridges 16 of the inner ring 12 may be non-identical.

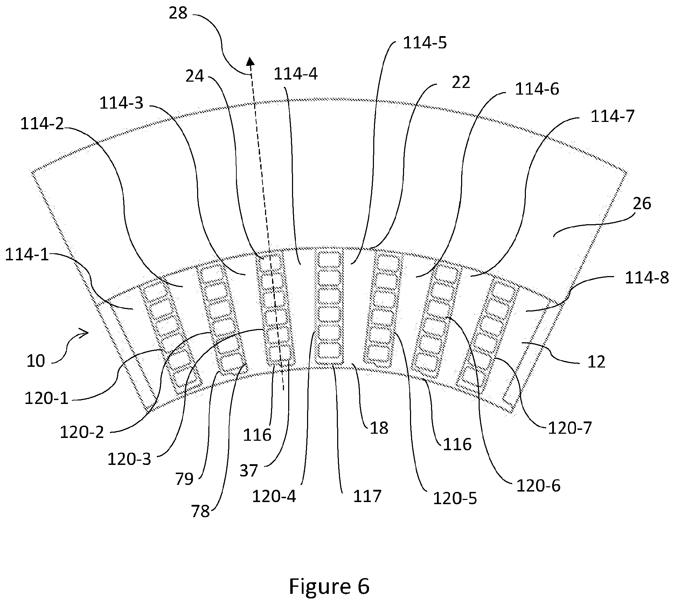

Figure 6 illustrates an alternative embodiment of a stator 10. In particular, figure 6 illustrates an alternative arrangement of material bridges to the arrangement of material bridges 16 shown in figure 4, where any features of the arrangement of figure 6 which correspond to equivalent features of figure 4 are illustrated with the same reference numerals as those shown in figure 4.

Figure 6 illustrates a series of slots 120-1, 120-2, 120-3, 120-4, 120-5, 120-6, 120-7 and a series of adjacent teeth 114-1, 114-2, 114-3, 114-4, 114-5, 114-6, 114-7, 114-8, the slots comprising material bridges positioned between one tooth and an adjacent tooth. In the arrangement of figure 6, the form and orientation of each asymmetric material bridge 116, which may be considered to be a first asymmetric material bridge 116, is the same as the material bridges 16 in the embodiment of figure 4, and as shown in more detail in figure 5, but every third bridge is replaced with a symmetric material bridge 117, that is, a material bridge which has no step. Thus, the asymmetric material bridges 116 of slots 120-2, 120-3, 120-5 and 120-6 are the same form and orientation as each of the material bridges 16 of the arrangement of figure 4. This pattern of asymmetric material bridges 116 and symmetric material bridges 117 is continued around the entire inner ring 12 of the stator 10. The asymmetric material bridges 116 and symmetric material bridges 117 form a repeating pattern of asymmetric material bridges 116 and symmetric material bridges 117.

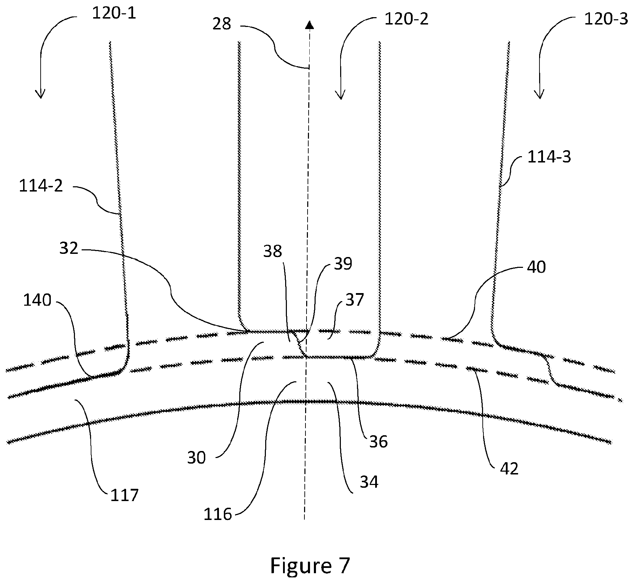

Figure 7 illustrates a magnified view of a portion of figure 6. In this embodiment, each asymmetric material bridge 116 comprises a first portion 30 comprising a first surface 32 inside the asymmetric slots 120-2, 120-3 and a second portion 34 comprising a second surface 36 inside the asymmetric slots 120-2, 120-3. The first surface 32 is located on, or tangentially to, a first curved plane 40 and the second surface 36 is located on, or tangentially to, a second curved plane 42, where the first curved plane 40 and second curved plane 42 are concentric planes which are radially separated. That is, plane 40 and plane 42 are circular planes. In figure 7 it is observed that, between two adjacent teeth 114-2, 114-3, a first portion 30 comprising a first surface 32 inside the slot 120-2 extends from the first one of the teeth 114-2 towards the second one of the teeth 114-3, and a second portion 34 comprising a second surface 36 inside the slot 120-2 extends from the second one of the teeth 114-3 towards the first one of the teeth 114-2, wherein the first surface 32 is radially separated from the second surface 36. The first surface 32 is more radially distal from the central stator axis 80 of the stator 10 than the second surface 36, such that the thickness of the asymmetric material bridge 116 at the first surface 32 is larger than the thickness of the asymmetric material bridge 116 at the second surface 36.

The first surface 32 and the second surface 36 may form a stepped arrangement. The first surface 32 can be seen to be an upper step upon which the radially inner one of the windings 24 in the slot 120-2 can be positioned, as illustrated in figure 6. The second surface 36 can be seen to be a lower step which does not contact the radially inner one of the windings 24 in the slot 120-2, as illustrated in figure 6, thereby creating a gap 37 which may be used as a cooling channel for cooling the windings 24. The gap 37 forming the cooling channel 37 may form part of a fluidic cooling system, whereby a coolant, such as oil, can be passed through the cooling channel 37 in order to transfer heat from the windings 24, and the surrounding stator 10, to the coolant.

Each asymmetric material bridge 116 comprises a third portion 38 extending from the first portion 30 to the second portion 34. The third portion 38 comprises a third surface 39 between the first surface 32 and the second surface 36.

Figure 6 additionally illustrates the positioning of the symmetric slots 120-1, 120-4, 120-7, and figure 7 additionally shows a magnified view in relation to one symmetric slot 120-1. In this embodiment, each symmetric material bridge 117 comprises an inner surface 140 inside the respective symmetric slot 120-1, 120-4, 120-7. The inner surface 140 may be located on, or tangentially to, the second curved plane 42. Alternatively, the inner surface 140 may be located on, or tangentially to, the first curved plane 40. In the latter case at least, the windings 24 may be retained at the same radial position as the windings 24 in the asymmetric slots 120-2, 120-3, 120-5, 120-6. In other embodiments, the inner surface 140 may lie on, or tangentially to, a plane between the first curved plane 40 and the second curved plane 42.

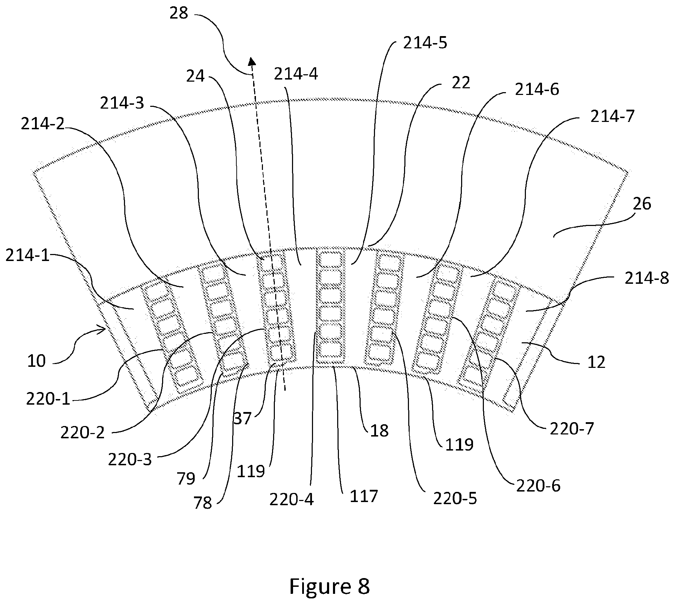

Figure 8 illustrates an alternative embodiment of a stator 10. In particular, figure 8 illustrates an alternative arrangement of material bridges to the arrangement of material bridges 16 shown in figure 4, where any features of the arrangement of figure 8 which correspond to equivalent features of figure 4 are illustrated with the same reference numerals as those shown in figure 4.

Figure 8 illustrates a series of slots 220-1, 220-2, 220-3, 220-4, 220-5, 220-6, 220-7 and a series of adjacent teeth 214-1, 214-2, 214-3, 214-4, 214-5, 214-6, 214-7, 214-8, the slots comprising material bridges positioned between one tooth and an adjacent tooth. In the arrangement of figure 8, the form of each asymmetric material bridge 119, which may be considered to be second asymmetric material bridges 119, is similar to the material bridges 16 in the embodiment of figure 4, but is mirrored in a radial axis 28 of the stator 10, which projects from the central stator axis 80 through the centre of the slot, when compared to the material bridges 16 in the embodiment of figure 4 and as further shown in more detail in figure 5. Additionally, every third bridge is replaced with a symmetric material bridge 117, that is, a material bridge which has no step. Thus, the asymmetric material bridges 119 of slots 220-2, 220-3, 220-5 and 220-6 are mirrored when compared to the material bridges 16 of the arrangement of figure 4, with the intervening bridges being symmetric. This pattern of asymmetric material bridges 119 and symmetric material bridges 117 is continued around the entire inner ring 12 of the stator 10. The asymmetric material bridges 119 and symmetric material bridges 117 form a repeating pattern of asymmetric material bridges 119 and symmetric material bridges 117.

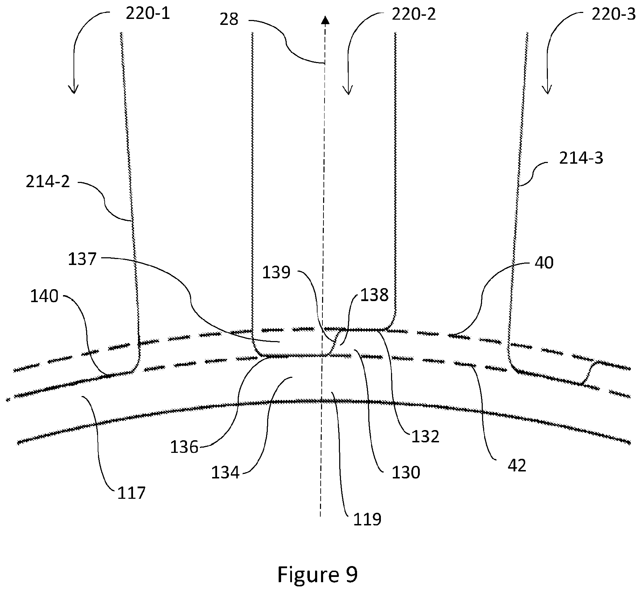

Figure 9 illustrates a magnified view of a portion of figure 8. In this embodiment, each asymmetric material bridge 119 comprises a first portion 130 comprising a first surface 132 inside the asymmetric slots 220-2, 220-3 and a second portion 134 comprising a second surface 136 inside the asymmetric slots 220-2, 220-3. The first surface 132 is located on, or tangentially to, a first curved plane 40 and the second surface 136 is located on, or tangentially to, a second curved plane 42, where the first curved plane 40 and second curved plane 42 are concentric planes which are radially separated. That is, plane 40 and plane 42 are circular planes. In figure 9 it is observed that, between two adjacent teeth 214-2, 214-3, a first portion 130 comprising a first surface 132 inside the slot 220-2 extends from the first one of the teeth 214-3 towards the second one of the teeth 214-2, and a second portion 134 comprising a second surface 136 inside the slot 220-2 extends from the second one of the teeth 214-2 towards the first one of the teeth 214-3, wherein the first surface 132 is radially separated from the second surface 136. The first surface 132 is more radially distal from the central stator axis 80 of the stator 10 than the second surface 136, such that the thickness of the asymmetric material bridge 119 at the first surface 132 is larger than the thickness of the asymmetric material bridge 119 at the second surface 136.

The first surface 132 and the second surface 136 may form a stepped arrangement. The first surface 132 can be seen to be an upper step upon which the radially inner one of the windings 24 in the slot 220-2 can be positioned, as illustrated in figure 8. The second surface 136 can be seen to be a lower step which does not contact the radially inner one of the windings 24 in the slot 220-2, as illustrated in figure 8, thereby creating a gap 137 which may be used as a cooling channel for cooling the windings 24. The gap 137 forming the cooling channel 137 may form part of a fluidic cooling system, whereby a coolant, such as oil, can be passed through the cooling channel 137 in order to transfer heat from the windings 24, and the surrounding stator 10, to the coolant.

Each asymmetric material bridge 119 comprises a third portion 138 extending from the first portion 130 to the second portion 134. The third portion 138 comprises a third surface 139 between the first surface 132 and the second surface 136.

Therefore, it can be seen that the arrangement of the second asymmetric material bridges 119 is mirrored in a radial axis 28 of the stator 10, which projects from the central stator axis 80 through the centre of the respective slot, when compared to the arrangement of the first material bridges 116 illustrated in figure 6 and figure 7.

Figure 8 additionally illustrates the positioning of the symmetric slots 220-1, 220-4, 220-7, and figure 9 additionally shows a magnified view in relation to one symmetric slot 220-1. In this embodiment, each symmetric material bridge 117 comprises an inner surface 140 inside the respective symmetric slot 220-1, 220-4, 220-7. The inner surface 140 may be located on, or tangentially to, the second curved plane 42. Alternatively, the inner surface 140 may be located on, or tangentially to, the first curved plane 40. In the latter case at least, the windings 24 may be retained at the same radial position as the windings 24 in the asymmetric slots 220-2, 220-3, 220-5, 220-6. In other embodiments, the inner surface 140 may lie on, or tangentially to, a plane between the first curved plane 40 and the second curved plane 42.

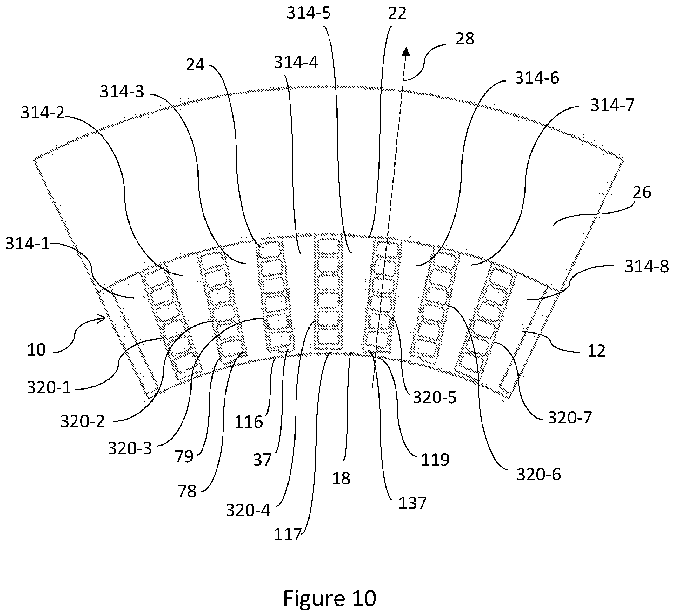

Figure 10 illustrates an alternative embodiment of a stator 10. In particular, figure 10 illustrates an alternative arrangement of material bridges to the arrangement of material bridges 16 shown in figure 4, where any features of the arrangement of figure 10 which correspond to equivalent features of figure 4 are illustrated with the same reference numerals as those shown in figure 4.

Figure 10 illustrates a series of slots 320-1, 320-2, 320-3, 320-4, 320-5, 320-6, 320-7 and a series of adjacent teeth 314-1, 314-2, 314-3, 314-4, 314-5, 314-6, 314-7, 314-8, the slots comprising material bridges positioned between one tooth and an adjacent tooth. In the arrangement of figure 10, two different asymmetric material bridges 116, 119 are provided in adjacent slots, these can be identified as first asymmetric material bridges 116 and second asymmetric material bridges 119. In the arrangement of figure 10, the form and orientation of each first asymmetric material bridge 116 is the same as the material bridges 16 in the embodiment of figure 4, and as shown in more detail in figure 5. The form of each second asymmetric material bridge 119 is similar to the material bridges 16 in the embodiment of figure 4, but is mirrored in a radial axis 28 of the stator 10, which projects from the central stator axis 80 through the centre of the slot, when compared to the material bridges 16 in the embodiment of figure 4 and as further shown in more detail in figure 5. Additionally, every third bridge is a symmetric material bridge 117, that is, a material bridge which has no step. Thus, the first asymmetric material bridges 116 of slots 320-3 and 320-6 are the same as the material bridges 16 of the embodiment of figure 4 and the second asymmetric material bridges 119 of slots 320-2 and 320-5 are mirrored when compared to the material bridges 16 of the arrangement of figure 4. As viewed in figure 10, the order of material bridges 116, 117, 119 in a clockwise direction around the stator 10 is, firstly a symmetric material bridge 117, then a second asymmetric material bridge 119 and finally a first asymmetric material bridge 116, this order being repeated around the entire inner ring 12 of the stator 10. Alternatively, it can be considered that the order of the material bridges in the first direction 82, that is the direction of rotation of the rotor 76 about the central stator axis 80 which is an anti-clockwise or counter clockwise direction relative to the stator shown in figure 10, is a symmetric material bridge 117, a first asymmetric material bridge 116 and a second asymmetric material bridge 119. The first asymmetric material bridges 116, second asymmetric material bridges 119 and symmetric material bridges 117 form a repeating pattern of asymmetric material bridges 116, 119 and symmetric material bridges 117.

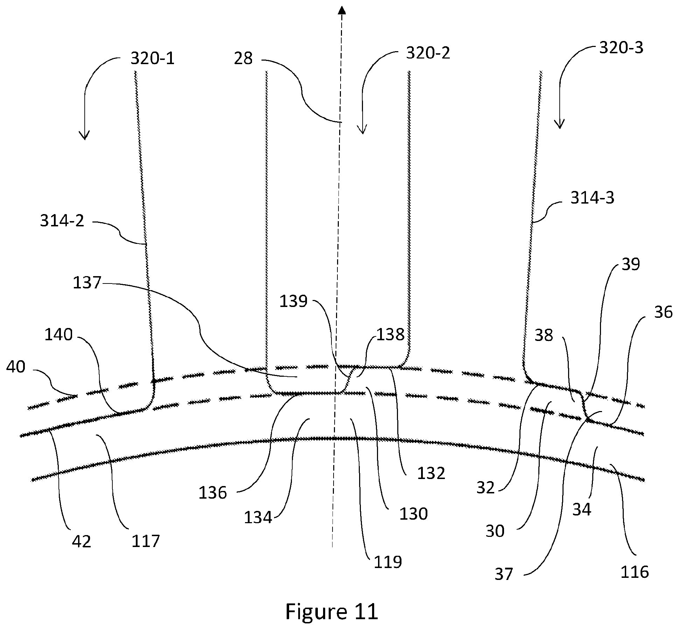

Figure 11 illustrates a magnified view of a portion of figure 10. In this embodiment, each asymmetric material bridge 116 comprises a first portion 30 comprising a first surface 32 inside the asymmetric slot 320-3 and a second portion 34 comprising a second surface 36 inside the asymmetric slot 320-3. The first surface 32 is located on, or tangentially to, a first curved plane 40 and the second surface 36 is located on, or tangentially to, a second curved plane 42, where the first curved plane 40 and second curved plane 42 are concentric planes which are radially separated. That is, plane 40 and plane 42 are circular planes. In figure 10 and figure 11 it is observed that, between two adjacent teeth 314-3, 314-4, a first portion 30 comprising a first surface 32 inside the slot 320-3 extends from the first one of the teeth 314-3 towards the second one of the teeth 314-4, and a second portion 34 comprising a second surface 36 inside the slot 320-3 extends from the second one of the teeth 314-4 towards the first one of the teeth 314-3, wherein the first surface 32 is radially separated from the second surface 36. The first surface 32 is more radially distal from the central stator axis 80 of the stator 10 than the second surface 36, such that the thickness of the first asymmetric material bridge 116 at the first surface 32 is larger than the thickness of the first asymmetric material bridge 116 at the second surface 36.

The first surface 32 and the second surface 36 may form a stepped arrangement. The first surface 32 can be seen to be an upper step upon which the radially inner one of the windings 24 in the slot 320-3 can be positioned, as illustrated in figure 10. The second surface 36 can be seen to be a lower step which does not contact the radially inner one of the windings 24 in the slot 320-3, as illustrated in figure 10, thereby creating a gap 37 which may be used as a cooling channel for cooling the windings 24. The gap 37 forming the cooling channel 37 may form part of a fluidic cooling system, whereby a coolant, such as oil, can be passed through the cooling channel 37 in order to transfer heat from the windings 24, and the surrounding stator 10, to the coolant.

Each first asymmetric material bridge 116 comprises a third portion 38 extending from the first portion 30 to the second portion 34. The third portion 38 comprises a third surface 39 between the first surface 32 and the second surface 36.

Further in this embodiment, each second asymmetric material bridge 119 comprises a first portion 130 comprising a first surface 132 inside the asymmetric slot 320-2 and a second portion 134 comprising a second surface 136 inside the asymmetric slot 320-2. The first surface 132 is located on, or tangentially to, a first curved plane 40 and the second surface 136 is located on, or tangentially to, a second curved plane 42, where the first curved plane 40 and second curved plane 42 are concentric planes which are radially separated. That is, plane 40 and plane 42 are circular planes. In figure 11 it is observed that, between two adjacent teeth 314-2, 314-3, a first portion 130 comprising a first surface 132 inside the slot 320-2 extends from the first one of the teeth 314-3 towards the second one of the teeth 314-2, and a second portion 134 comprising a second surface 136 inside the slot 320-2 extends from the second one of the teeth 314-2 towards the first one of the teeth 314-3, wherein the first surface 132 is radially separated from the second surface 136. The first surface 132 is more radially distal from the central stator axis 80 of the stator 10 than the second surface 136, such that the thickness of the second asymmetric material bridge 119 at the first surface 132 is larger than the thickness of the second asymmetric material bridge 119 at the second surface 136.

The first surface 132 and the second surface 136 may form a stepped arrangement. The first surface 132 can be seen to be an upper step upon which the radially inner one of the windings 24 in the slot 320-2 can be positioned, as illustrated in figure 10. The second surface 136 can be seen to be a lower step which does not contact the radially inner one of the windings 24 in the slot 320-2, as illustrated in figure 10, thereby creating a gap 137 which may be used as a cooling channel for cooling the windings 24. The gap 137 forming the cooling channel 137 may form part of a fluidic cooling system, whereby a coolant, such as oil, can be passed through the cooling channel 137 in order to transfer heat from the windings 24, and the surrounding stator 10, to the coolant.

Each second asymmetric material bridge 119 comprises a third portion 138 extending from the first portion 130 to the second portion 134. The third portion 138 comprises a third surface 139 between the first surface 132 and the second surface 136.

Therefore, it can be seen that the arrangement of the second asymmetric material bridges 119 is mirrored in a radial axis 28 of the stator 10, which projects from the central stator axis 80 through the centre of the respective slot, when compared to the arrangement of the first asymmetric material bridges 116.

In the arrangement of figure 10 and figure 11, the first asymmetric material bridges 116 are advanced of adjacent respective second asymmetric material bridges 119. That is, when rotated in the normal operating direction of rotation of the rotor 76, a position on the rotor 76 will encounter a first asymmetric material bridge 116 before encountering an adjacent second asymmetric material bridge 119.

Figure 10 additionally illustrates the positioning of the symmetric slots 320-1, 320-4, 320-7, and figure 11 additionally shows a magnified view in relation to one symmetric slot 320-1. In this embodiment, each symmetric material bridge 117 comprises an inner surface 140 inside the respective symmetric slot 320-1, 320-4, 320-7. The inner surface 140 may be located on, or tangentially to, the second curved plane 42. Alternatively, the inner surface 140 may be located on, or tangentially to, the first curved plane 40. In the latter case at least, the windings 24 may be retained at the same radial position as the windings 24 in the asymmetric slots 320-2, 320-3, 320-5, 320-6. In other embodiments, the inner surface 140 may lie on, or tangentially to, a plane between the first curved plane 40 and the second curved plane 42.

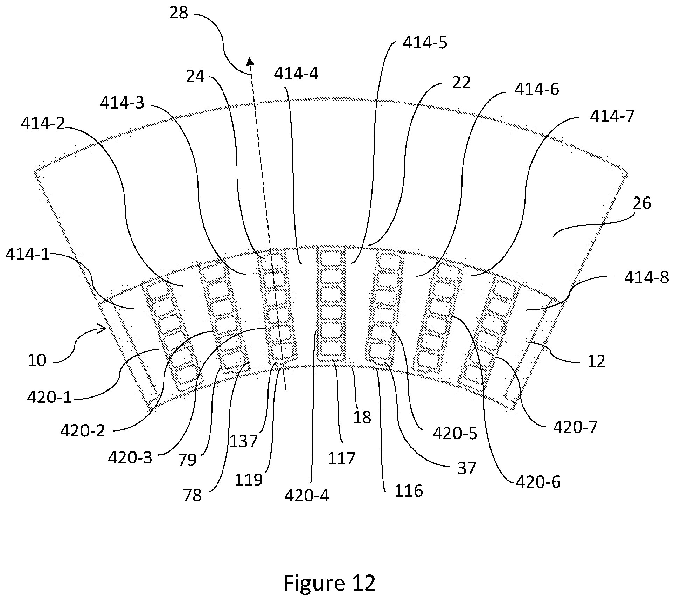

Figure 12 illustrates an alternative embodiment of a stator 10. In particular, figure 12 illustrates an alternative arrangement of material bridges to the arrangement of material bridges 16 shown in figure 4, where any features of the arrangement of figure 12 which correspond to equivalent features of figure 4 are illustrated with the same reference numerals as those shown in figure 4.

Figure 12 illustrates a series of slots 420-1, 420-2, 420-3, 420-4, 420-5, 420-6, 420-7 and a series of adjacent teeth 414-1, 414-2, 414-3, 414-4, 414-5, 414-6, 414-7, 414-8, the slots comprising material bridges positioned between one tooth and an adjacent tooth. In the arrangement of figure 12, two different asymmetric material bridges 116, 119 are provided in adjacent slots, these can be identified as first asymmetric material bridges 116 and second asymmetric material bridges 119. In the arrangement of figure 12, the form and orientation of each first asymmetric material bridge 116 is the same as the material bridges 16 in the embodiment of figure 4 and as shown in more detail in figure 5. The form of each second asymmetric material bridge 119 is similar to the material bridges 16 in the embodiment of figure 4, but is mirrored in a radial axis 28 of the stator 10, which projects from the central stator axis 80 through the centre of the slot, when compared to the material bridges 16 in the embodiment of figure 4 and as further shown in more detail in figure 5. Additionally, every third bridge is a symmetric material bridge 117, that is, a material bridge which has no step. Thus, the first asymmetric material bridges 116 of slots 420-2 and 420-5 are the same as the material bridges 16 of the embodiment of figure 4 and the second asymmetric material bridges 119 of slots 420-3 and 320-6 are mirrored when compared to the material bridges 16 of the arrangement of figure 4. As viewed in figure 12, the order of the material bridges 116, 117, 119 in a clockwise direction around the stator 10 is, firstly a symmetric material bridge 117, then a first asymmetric material bridge 116 and finally a second asymmetric material bridge 119, this order being repeated around the entire inner ring 12 of the stator 10. Alternatively, it can be considered that the order of the material bridges in the first direction 82, that is the direction of rotation of the rotor 76 about the central stator axis 80 which is an anti-clockwise or counter clockwise direction relative to the stator shown in figure 10, is a symmetric material bridge 117, a second asymmetric material bridge 119 and a first asymmetric material bridge 116. The first asymmetric material bridges 116, second asymmetric material bridges 119 and symmetric material bridges 117 form a repeating pattern of asymmetric material bridges 116, 119 and symmetric material bridges 117.

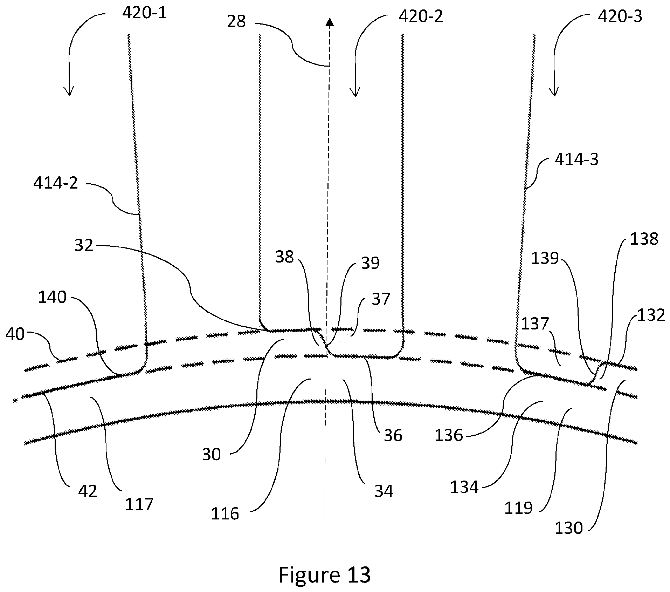

Figure 13 illustrates a magnified view of a portion of figure 12. In this embodiment, each first asymmetric material bridge 116 comprises a first portion 30 comprising a first surface 32 inside the asymmetric slot 420-2 and a second portion 34 comprising a second surface 36 inside the asymmetric slot 420-2. The first surface 32 is located on, or tangentially to, a first curved plane 40 and the second surface 36 is located on, or tangentially to, a second curved plane 42, where the first curved plane 40 and second curved plane 42 are concentric planes which are radially separated. That is, plane 40 and plane 42 are circular planes. In figure 12 and figure 13 it is observed that, between two adjacent teeth 414-2, 414-3, a first portion 30 comprising a first surface 32 inside the slot 420-2 extends from the first one of the teeth 414-2 towards the second one of the teeth 414-3, and a second portion 34 comprising a second surface 36 inside the slot 420-2 extends from the second one of the teeth 414-3 towards the first one of the teeth 414-2, wherein the first surface 32 is radially separated from the second surface 36. The first surface 32 is more radially distal from the central stator axis 80 of the stator 10 than the second surface 36, such that the thickness of the first asymmetric material bridge 116 at the first surface 32 is larger than the thickness of the first asymmetric material bridge 116 at the second surface 36.

The first surface 32 and the second surface 36 may form a stepped arrangement. The first surface 32 can be seen to be an upper step upon which the radially inner one of the windings 24 in the slot 420-2 can be positioned, as illustrated in figure 12. The second surface 36 can be seen to be a lower step which does not contact the radially inner one of the windings 24 in the slot 420-2, as illustrated in figure 12, thereby creating a gap 37 which may be used as a cooling channel for cooling the windings 24. The gap 37 forming the cooling channel 37 may form part of a fluidic cooling system, whereby a coolant, such as oil, can be passed through the cooling channel 37 in order to transfer heat from the windings 24, and the surrounding stator 10, to the coolant.

Each first asymmetric material bridge 116 comprises a third portion 38 extending from the first portion 30 to the second portion 34. The third portion 38 comprises a third surface 39 between the first surface 32 and the second surface 36.

Further in this embodiment, each second asymmetric material bridge 119 comprises a first portion 130 comprising a first surface 132 inside the asymmetric slot 420-3 and a second portion 134 comprising a second surface 136 inside the asymmetric slot 420-3. The first surface 132 is located on, or tangentially to, a first curved plane 40 and the second surface 136 is located on, or tangentially to, a second curved plane 42, where the first curved plane 40 and second curved plane 42 are concentric planes which are radially separated. That is, plane 40 and plane 42 are circular planes. In figures 12 and 13 it is observed that, between two adjacent teeth 414-3, 414-4, a first portion 130 comprising a first surface 132 inside the slot 420-3 extends from the first one of the teeth 414-4 towards the second one of the teeth 414-3, and a second portion 134 comprising a second surface 136 inside the slot 420-3 extends from the second one of the teeth 414-3 towards the first one of the teeth 414-4, wherein the first surface 132 is radially separated from the second surface 136. The first surface 132 is more radially distal from the central stator axis 80 of the stator 10 than the second surface 136, such that the thickness of the second asymmetric material bridge 119 at the first surface 132 is larger than the thickness of the second asymmetric material bridge 119 at the second surface 136.

The first surface 132 and the second surface 136 may form a stepped arrangement. The first surface 132 can be seen to be an upper step upon which the radially inner one of the windings 24 in the slot 420-3 can be positioned, as illustrated in figure 12. The second surface 136 can be seen to be a lower step which does not contact the radially inner one of the windings 24 in the slot 420-3, as illustrated in figure 12, thereby creating a gap 137 which may be used as a cooling channel for cooling the windings 24. The gap 137 forming the cooling channel 137 may form part of a fluidic cooling system, whereby a coolant, such as oil, can be passed through the cooling channel 137 in order to transfer heat from the windings 24, and the surrounding stator 10, to the coolant.

Each second asymmetric material bridge 119 comprises a third portion 138 extending from the first portion 130 to the second portion 134. The third portion 138 comprises a third surface 139 between the first surface 132 and the second surface 136.

Therefore, it can be seen that the arrangement of the second asymmetric material bridges 119 is mirrored in a radial axis 28 of the stator 10, which projects from the central stator axis 80 through the centre of the respective slot, when compared to the arrangement of the first asymmetric material bridges 116.

In the arrangement of figure 12 and figure 13, the second asymmetric material bridges 119 are advanced of adjacent respective first asymmetric material bridges 116. That is, when rotated in the normal operating direction of rotation of the rotor 76, a position on the rotor 76 will encounter a second asymmetric material bridge 119 before encountering an adjacent first asymmetric material bridge 116.

Figure 12 additionally illustrates the positioning of the symmetric slots 420-1, 420-4, 420-7, and figure 13 additionally shows a magnified view in relation to one symmetric slot 420-1. In this embodiment, each symmetric material bridge 117 comprises an inner surface 140 inside the respective symmetric slot 420-1, 420-4, 420-7. The inner surface 140 may be located on, or tangentially to, the second curved plane 42. Alternatively, the inner surface 140 may be located on, or tangentially to, the first curved plane 40. In the latter case at least, the windings 24 may be retained at the same radial position as the windings 24 in the asymmetric slots 420-2, 420-3, 420-5, 420-6. In other embodiments, the inner surface 140 may lie on, or tangentially to, a plane between the first curved plane 40 and the second curved plane 42.

By having asymmetric material bridges 116, 119 and rotating the rotor 76 in the first direction 82 relative to those material bridges 116, 119, torque ripple and rotor iron loss can be modified and may be significantly reduced compared to when the same rotor 76 is rotated relative to a stator with only symmetric bridges.

These arrangements of symmetric and asymmetric material bridges 16, 116, 117, 119 cause torque ripple harmonics, for example the 6^{th} harmonic, in the motors in which the stator 10 operates to be reduced or cancelled, thereby providing the benefit of improved noise, vibration and harshness (NVH) characteristics. The specific asymmetry to be introduced may be dependent on the number of slots / pole / phase adopted in the design.

In some embodiments comprising asymmetric material bridges 16, 116, such as those of figure 4 and figure 6, a thinner portion of each of the asymmetric material bridges 16, or first asymmetric material bridges 116, is located, in use, at the leading edge 78 of the respective asymmetric material bridges 16, or first asymmetric material bridges 116, in the slot 20, 120 in the direction of rotation of the rotor 76. The direction of the rotation of the rotor 76 is illustrated in figure 3, and is anti-clockwise or counter clockwise in the view of the illustrated arrangement. The asymmetric material bridges 16 illustrated in figure 4 and the first asymmetric material bridges 116 illustrated in figure 6 may be of the same form.

Therefore, as a particular point on the rotor 76 passes a slot 20,120 in the stator 10, that point on the rotor 76 first encounters a thinner portion of an asymmetric material bridge 16, or first asymmetric material bridge 116, before encountering a thicker portion of the asymmetric material bridge 16, or first asymmetric material bridge 116.

In the example of the stator arrangement shown in figure 3, in conjunction with figure 5 and figure 7 which show the material bridges 16, 116 in magnified detail, that point on the rotor 76 first encounters the second portion 34 of the asymmetric material bridge 16, 116, followed by the first portion 30 of the asymmetric material bridge 16, 116. The first portion 30 of the asymmetric material bridge 16, 116 is therefore considered to be at a trailing edge 79 of the asymmetric material bridge 16, or first asymmetric material bridge 116, or in other words, a trailing edge of the slot 20. By having asymmetric material bridges 16, 116 and rotating the rotor 76 in this first direction 82 relative to those material bridges 16, 116, torque ripple and rotor iron loss are significantly reduced compared to when the same rotor 76 is rotated relative to a stator 10 with only symmetric bridges.

In alternative embodiments comprising second asymmetric material bridges 119, such as those of figure 8, figure 10, and figure 12, the first portion 130 of a second asymmetric material bridge 119, which is a thicker portion of the second asymmetric material bridge 119, is located, in use, at the leading edge 78 of the second asymmetric material bridge 119 in the direction of rotation of the rotor 76, where the direction of the rotation of the rotor 76 is illustrated in figure 3.

Therefore, the second portion 134 of the second asymmetric material bridge 119, which is a thinner portion of the second asymmetric material bridge 119, is located, in use, at a trailing edge 79 of the second asymmetrical material bridge 119 in the direction of rotation of the rotor 76.

In some embodiments, such as those of figure 10 and figure 12, both first asymmetric material bridges 116 and second asymmetric material bridges 119 form the arrangement of material bridges, such that some material bridges comprise thicker leading edges and some material bridges comprise thinner leading edges. In this way the noise, vibration and harshness (NVH) characteristics of the motors in which the stator 10 operates can be modified.

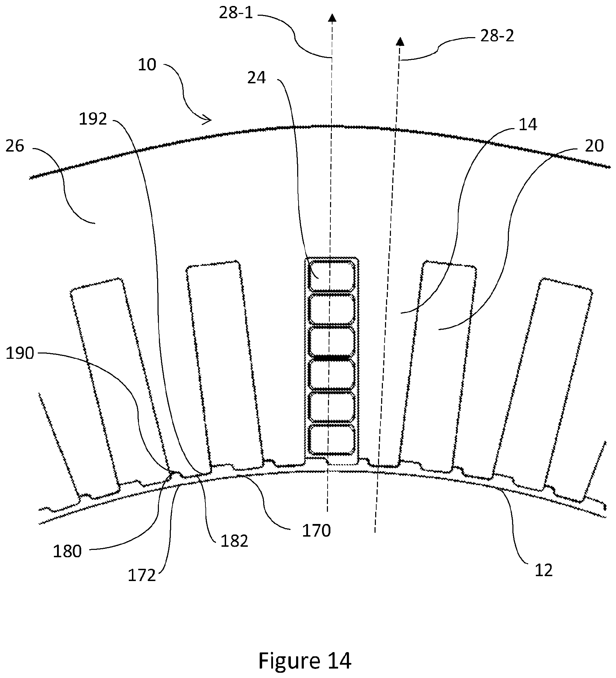

Whilst the arrangements illustrated in figures 1 to 13 illustrate a two part stator having an inner ring 12 comprising a plurality of radially projecting teeth 14, and an outer ring 26 for engagement with the radially outermost surfaces of the radially projecting teeth 14 of the inner ring 12, the arrangements of material bridges described above can be equally applied to arrangements where the inner ring 12 comprises the material bridges 16, 116, 117, 119, but where the outer ring comprises the radially projecting teeth 14. Figure 14 is an illustration of part of the cross section of a stator 10, the stator 10 being in the form of a two-part stator having an inner ring 12 and an outer ring 26, where the outer ring 26 comprises the radially projecting teeth 14.

The inner ring 12 and the outer ring 26 are concentric around a central stator axis 80. The inner ring 12 is radially inwards or substantially radially inwards of the outer ring 26. The outer ring 26 comprises a plurality of radially projecting teeth 14 and a plurality of slots 20. The slots 20 separate adjacent teeth 14. The teeth 14 and slots 20 extend along radial axes 28, 28-1, 28-2 which project from the central stator axis 80. In figure 14 a radial axis 28-1 is shown through a slot 20 and a radial axis 28-2 is shown through a tooth 14. Further, in figure 14, windings 24 are illustrated in one slot 20 only for simplicity, though it will be understood that each slot will contain such windings 24 in a complete stator 10.

In the embodiment illustrated in figure 14, the inner ring 12 comprises a first section 170 having material bridges 16 that effectively sit between the teeth 14. These material bridges 16 can be in any of the arrangements herein described, for example, any of the arrangements as shown in figures 4 to 13, which contain various forms of material bridges 16, 116, 117, 119.

The inner ring 12 further comprises a second section 172 having a stepped arrangement of surfaces 180, 182 for engagement with a corresponding stepped arrangement of surfaces 190, 192, which may be considered as ring engagement surfaces 190, 192, on the outer ring 26. The ring engagement surfaces 190, 192 provide a connection between the inner ring 12 and a tooth 14 of the outer ring 26.

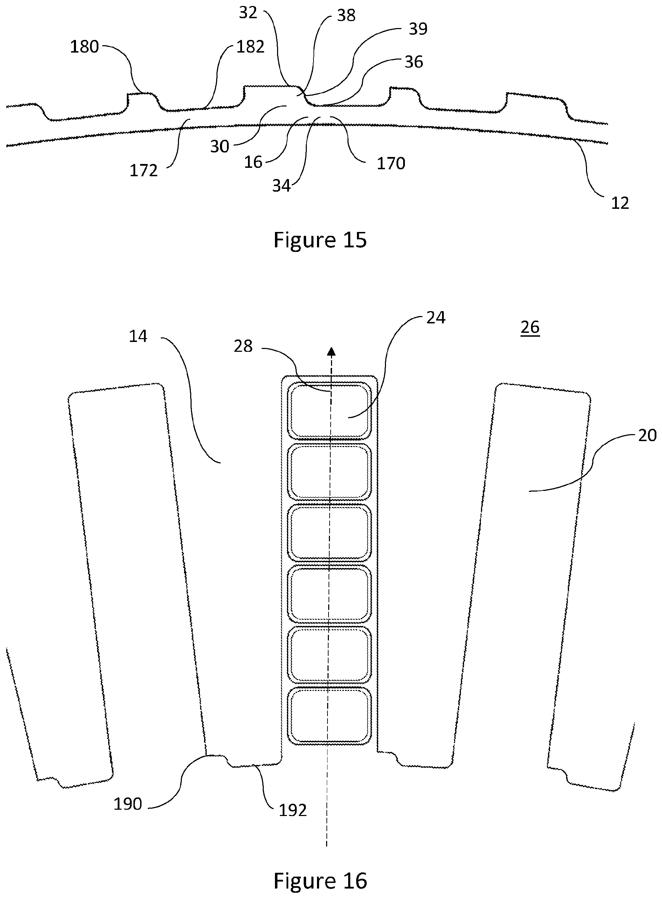

Figure 15 illustrates the inner ring 12 of the stator 10 separate from the outer ring 26. The first section 170 of the inner ring 12 comprises material bridges 16 that are configured to be located between the teeth 14 of the outer ring 26 when the outer ring 26 is positioned around the inner ring 12. Therefore, the material bridges 16 are configured to be located in the slots 20 of the outer ring 26 when the outer ring 26 is positioned around the inner ring 12. The material bridges 16 may be as previously described in relation to figures 4 to 13.

In some embodiments the material bridges 16 comprise a first portion 30 comprising a first surface 32, a second portion 34 comprising a second surface 36 and a third portion 38 comprising a third surface 39, the third portion 38 extending from the first portion 30 to the second portion 34, providing a third surface 39 extending between the first surface 32 and the second surface 36, as previously described. The first surface 32 is radially separated from the second surface 36.

The first surface 32 is configured to be located inside the slot 20 of the outer ring 26 and is configured to extend from a first one of the teeth 14 of the outer ring 26 towards a second one of the teeth 14 of the outer ring, the second one of the teeth 14 being adjacent the first one of the teeth 14.

The second surface 36 is configured to be located inside the slot 20 of the outer ring 26 and is configured to extend from the second one of the teeth 14 of the outer ring 26 towards the first one of the teeth 14 of the outer ring, the second one of the teeth 14 being adjacent the first one of the teeth 14.

The second section 172 of the inner ring 12 comprises a stepped arrangement of surfaces for engagement with a corresponding stepped arrangement of surfaces on the outer ring 26 of the stator 10. The second section 172 of the inner ring 12 comprises a first tooth engagement surface 180 and a second tooth engagement surface 182.

The first tooth engagement surface 180 may be a planar, or flat, surface. The first tooth engagement surface 180 may lie in a plane which is perpendicular to a radial axis 28 which projects from the central stator axis 80 through the first tooth engagement surface 180, the plane being at a first radial distance from the central stator axis 80. In other embodiments, the first tooth engagement surface 180 may define an arc, which is a portion of the circumference of a circle centred on the central stator axis 80 at a first radial distance from the central stator axis 80.

The second tooth engagement surface 182 may be a planar, or flat, surface. The second tooth engagement surface 182 may lie in a plane which is perpendicular to a radial axis 28 which projects from the central stator axis 80 through the second tooth engagement surface 182, the plane being at a second radial distance from the central stator axis 80, the second radial distance being smaller than the first radial distance. In other embodiments, the second tooth engagement surface 182 may define an arc, which is a portion of the circumference of a circle centred on the central stator axis 80 at a second radial distance from the central stator axis 80, the second radial distance being smaller than the first radial distance. Since the second radial distance is smaller than the first radial distance a stepped arrangement is provided for engagement with a tooth 14 of the outer ring 26, where the end of the tooth 14 has a correspondingly stepped arrangement.

Figure 16 illustrates the outer ring 26 of the stator 10 separate from the inner ring 12, where the outer ring comprises radially projecting teeth 14. The radially projecting teeth 14 have an end which is radially inwards of the remainder of the outer ring 26, the end comprising a stepped arrangement of surfaces 190, 192 for engagement with the inner ring 12.

A first ring engagement surface 190 is configured to engage with the first tooth engagement surface 180 of the inner ring 12. The first ring engagement surface 190 may be a planar, or flat, surface. The first ring engagement surface 190 may lie in a plane which is perpendicular to a radial axis 28 which projects from the central stator axis 80 through the first ring engagement surface 190, the plane being at a third radial distance from the central stator axis 80. In other embodiments, the first ring engagement surface 190 may define an arc, which is a portion of the circumference of a circle centred on the central stator axis 80 at a third radial distance from the central stator axis 80. The third radial distance may be equal to the first radial distance. Alternatively, the third radial distance may be smaller than the first radial distance in order to provide an interference fit between the inner ring 12 and the outer ring 26.

A second ring engagement surface 192 is configured to engage with the second tooth engagement surface 182 of the inner ring 12. The second ring engagement surface 192 may be a planar, or flat, surface. The second ring engagement surface 192 may lie in a plane which is perpendicular to a radial axis 28 which projects from the central stator axis 80 through the second ring engagement surface 192, the plane being at a fourth radial distance from the central stator axis 80, the fourth radial distance being smaller than the third radial distance. In other embodiments, the second ring engagement surface 192 may define an arc, which is a portion of the circumference of a circle centred on the central stator axis 80 at a fourth radial distance from the central stator axis 80, the fourth radial distance being smaller than the third radial distance. Since the fourth radial distance is smaller than the third radial distance a stepped arrangement is provided for engagement with a corresponding stepped arrangement on the inner ring 12. The fourth radial distance may be equal to the second radial distance. Alternatively, the fourth radial distance may be smaller than the second radial distance in order to provide an interference fit between the inner ring 12 and the outer ring 26.

The stator 10 may comprise an inner portion comprising a plurality of inner rings 12, wherein each of the plurality of stepped arrangements of surfaces on each of the inner rings 12 overlay corresponding stepped arrangements of surfaces on each adjacent inner ring 12, forming elongate stepped arrangements of surfaces in the inner portion of the stator 10.

The stator 10 may comprise an outer portion comprising a plurality of outer rings 26, wherein each of the plurality of radially projecting teeth 14 on each of the outer rings 26 overlay corresponding radially projecting teeth 14 on each adjacent outer ring 26, forming elongate radially projecting teeth 14 and elongate slots 20 in the outer portion of the stator 10.

In a method of manufacture of the arrangement of figure 14, a stator lamina ring is stamped to form an inner ring 12 and an outer ring 26. The outer ring 26 comprises a plurality of radially projecting teeth 14, each of the radially projecting teeth 14 having an end comprising a stepped arrangement of surfaces 190, 192 for engagement with a corresponding stepped arrangement of surfaces 180, 182 on an inner ring 12. Each of the radially projecting teeth 14 are separated from the adjacent teeth 14 by respective slots 20, wherein the slots 20 of the outer ring 26 are open at radially inner ends of the teeth. The inner ring 12 comprises a plurality of stepped arrangements of surfaces 180, 182 for engagement with corresponding stepped arrangements of surfaces 190, 192 on the teeth 14 of the outer ring 26 and a plurality of material bridges 16 which are configured to be located between the teeth 14 of the outer ring 26.

The method comprises joining a plurality of inner rings 12 together to form an inner portion of the stator 10, where each of the plurality of stepped arrangements of surfaces 180, 182on each of the inner rings 12 overlay corresponding stepped arrangements of surfaces 180, 182 on each adjacent inner ring 12, forming elongate stepped arrangements of surfaces in the inner portion of the stator 10.

The method comprises joining a plurality of outer rings 26 together to form an outer portion of the stator 10, wherein each of the plurality of radially projecting teeth 14 on each of the outer rings 26 overlay corresponding radially projecting teeth 14 on each adjacent outer ring 26, forming elongate radially projecting teeth 14 and elongate slots 20 in the outer portion 26 of the stator 10.

Once the plurality of outer rings 26 is formed to provide elongate slots 20, windings 24 are inserted into the elongate slots 20 of the outer portion of the stator 10.

Finally, the outer portion of the stator 10 can be oriented such that the plurality of stepped arrangements 190, 192 in the elongate radially projecting teeth 14 are positioned at the plurality of stepped arrangements 180, 182 in the inner portion of the stator 10.

In relation to embodiments where the inner ring 12 comprises radially projecting teeth 14, whilst the radially outer ends 22 of the teeth 14 of the inner ring may be substantially planar or have a curvature to match the inner curvature of the outer ring 26, in some embodiments, the radially outer ends 22 of the teeth 14 may be shaped to engage with corresponding features on the inner surface of the outer ring 26, to perform various functions such as tooth retention. As will be described further below, the cutting of the shaped form of the radially outer ends 22 of the teeth 14 may also provide the formation of cooling channels which, in use, are disposed between the windings 24 and outer ring 26 at the radially outer ends of the slots 20.

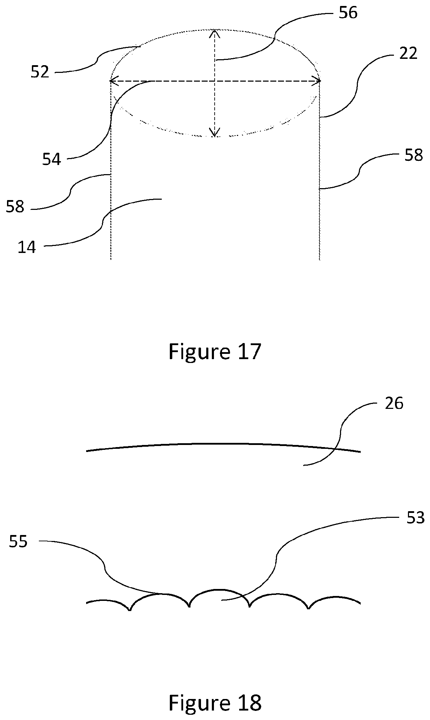

Figure 17 shows one form of the radially outer end 22 of a tooth 14 of the inner ring 12. The radially outer end 22 of each tooth 14 has, at least in part, a semi-elliptical surface 52. The semi-elliptical surface 52 provides smooth tapering edges which may be beneficial in the manufacturing process, firstly to avoid damage to windings 24 and secondly to help guide the windings 24 into the slots 20.

In some embodiments the inner ring 12 may have teeth 14 formed with radially outer ends 22 having, at least in part, semi-elliptical surfaces 52, wherein the inner ring 12 comprises only symmetrical material bridges 16. In other embodiments, the above-described asymmetrical material bridges 16, 116, 119 may be provided in the stator 10 along with teeth 14 formed with radially outer ends 22 having, at least in part, semi-elliptical surfaces 52.

The semi-elliptical surface 52 of the tooth 14 has a first diameter D 54, with ends which are contiguous with a respective surface 58 of the radially projecting tooth 14, and a second diameter d 56 in a range from 0.05D to 2D. The second diameter 56 is orthogonal to the first diameter 54. The semi-elliptical surface 52 provides a locating and/or retention feature when adjacent to or abutting a corresponding semi-elliptical feature of the outer ring 26, for example a corresponding feature of the outer ring 26 in the form of a semi-elliptical cavity 53 in the inner surface 55 of the outer ring 26, as illustrated in figure 18.

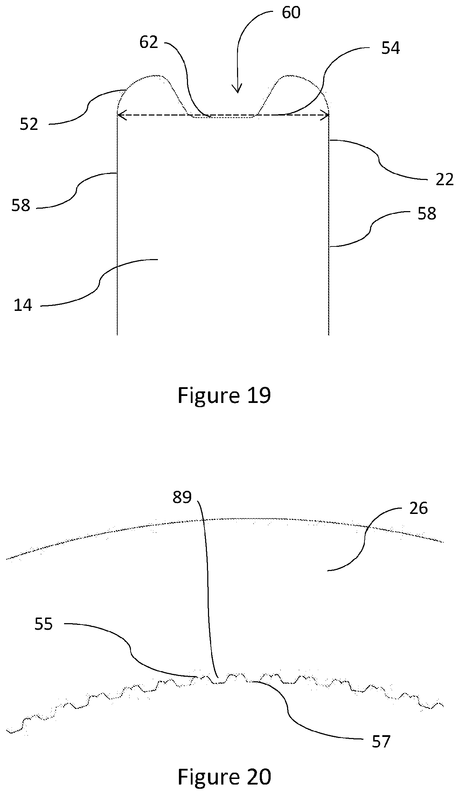

Figure 19 shows a modification to the radially outer end 22 of a tooth 14 of the inner ring 12 illustrated in figure 17. In this embodiment the radially outer end 22 of each tooth 14 comprises an indentation 60 in the semi-elliptical surface 52. The indentation 60 provides a locating and/or retention feature when adjacent to or abutting a corresponding feature of the outer ring 26, for example a corresponding feature of the outer ring 26 in the form of a projection 57 from the inner surface 55 of the outer ring 26, whilst maintaining a smooth surface for the insertion of the windings 24. In particular, the indentation in the semi-elliptical surface 52 of the tooth 14 may comprise a planar or flat surface 62 in a central portion of the radially outer end 22 of the tooth 14 having a corresponding feature of the outer ring 26 in the form of a planar or flat surface 57 projecting from the inner surface 55 of the outer ring 26 as illustrated in figure 20. The flat surface 62 may be on a plane parallel to the first diameter D 54, and may be between the location defined by the radially outermost surface of second diameter d 56, and the location of the first diameter D 54. Alternatively, the flat surface 62 may be on a plane parallel to the first diameter D 54 between the location or plane of the first diameter D 54 and the radially inner end 18 of the tooth 14.

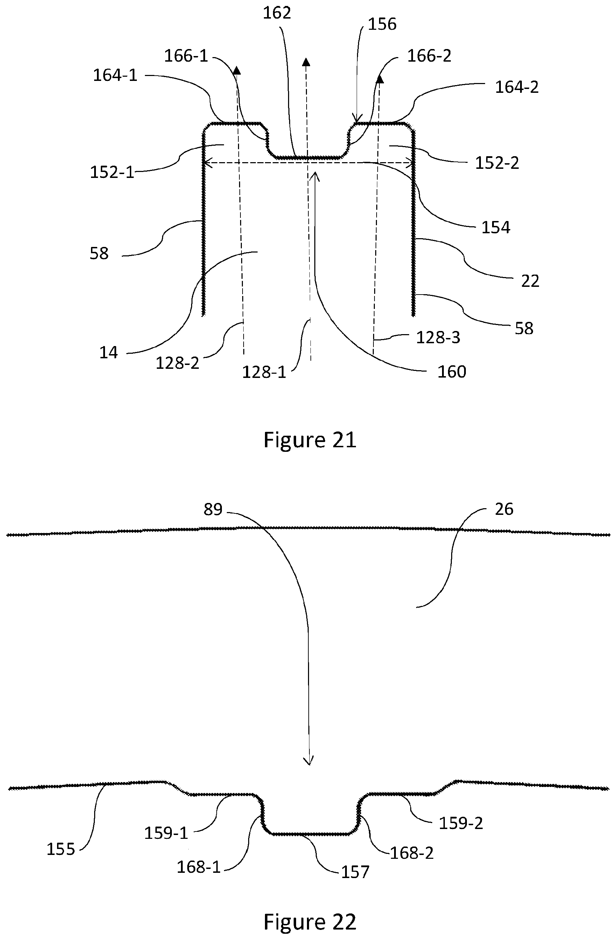

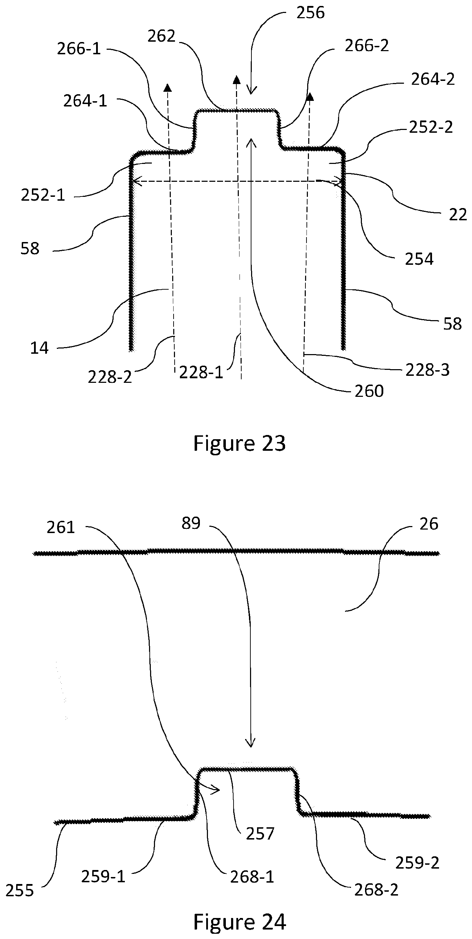

Figure 21 shows an alternative arrangement of the radially outer end 22 of a tooth 14 of the inner ring 12. This modification may be applied to any of the arrangements illustrated in figures 1 to 13. Each tooth 14 of the stator may take the same form, though in some embodiments, one or more tooth 14 may be of a different form and may be used to assist in the location of the inner ring 12 of the stator 10 in the outer ring 26 of the stator 10. At least one tooth 14 may take the form of that described below and shown in figure 21 or figure 23.

The radially outer end 22 of the tooth 14 comprises a first locating feature configured to engage or abut a second locating feature formed as part of the outer ring 26.

In the embodiment shown in figure 21, the radially outer end 22 of the tooth 14 comprises a first locating feature in the form of an indentation 160 in the upper tooth surface 156. The upper tooth surface 156 is the surface of the tooth 14 which is at the radially outer end 22 of the tooth 14. The indentation 160 is bounded, particularly circumferentially bounded, at the radially outer end 22 of the tooth 14, by two tooth projections 152-1, 152-2 which remain when the indentation 160 is formed during manufacture. The indentation 160 provides a locating and/or retention feature when adjacent to or abutting a corresponding second locating feature formed as part of the outer ring 26, for example a corresponding second locating feature in the form of a projection 157 from the inner surface 155 of the outer ring 26, as shown in figure 22.

The edges of the radially outer end 22 of the tooth 14 may be rounded, for example, by being formed with radius corners, to maintain a smooth surface for the insertion of the windings 24 during manufacture of the stator 10.

The indentation 160 in the upper tooth surface 156 of the tooth 14 may comprise an indentation surface 162 in a central portion of the radially outer end 22 of the tooth 14, the indentation surface 162 having a corresponding feature of the outer ring 26 in the form of a projection surface 157, where the projection surface 157 projects from the inner surface 155 of the outer ring 26 as illustrated in figure 22, to be received in the indentation 160. The projection surface 157 may abut or be in an interference fit with the indentation surface 162. In an interference arrangement the interference fit may be at least 0.035mm. The indentation surface 162 and the projection surface 157 may be considered to be azimuthal surfaces.

In some embodiments, the indentation surface 162 may be planar or flat and may lie on a plane parallel to a width 154 of the tooth 14, that is, the indentation surface 162 may lie in a plane which is perpendicular to a radial axis 128-1 which projects from the central stator axis 80 to the centre of the indentation surface 162. In other embodiments, the indentation surface 162 may define an arc, which is a portion of the circumference of a circle centred on the central stator axis 80, having a radius which is less than the distance from the central stator axis 80 to an outer edge, or the upper tooth surface 156, of the radially outer end 22 of the tooth 14.

The two tooth projections 152-1, 152-2 project radially further from the central stator axis 80 than the indentation surface 162 of the indentation 160. The first tooth projection 152-1 has a first tooth projection surface 164-1. The first tooth projection surface 164-1 has a corresponding feature on the outer ring 26 in the form of a first tooth projection receiving surface 159-1. The first tooth projection surface 164-1 and first tooth projection receiving surface 159-1 may be considered to be azimuthal surfaces.

The first tooth projection surface 164-1 may be planar or flat, that is, the first tooth projection surface 164-1 may lie in a plane which is perpendicular to a radial axis 128-2 which projects from the central stator axis 80 to the centre of the first tooth projection surface 164-1. In other embodiments, the first tooth projection surface 164-1 may define an arc, which is a portion of the circumference of a circle centred on the central stator axis 80, having a radius which is equal or substantially equal to the distance from the central stator axis 80 to an outer edge, or the upper tooth surface 156, of the radially outer end 22 of the tooth 14.

The second tooth projection 152-2 has a second tooth projection surface 164-2. The second tooth projection surface 164-2 has a corresponding feature on the outer ring 26 in the form of a second tooth projection receiving surface 159-2. The second tooth projection surface 164-2 and second tooth projection receiving surface 159-2 may be considered to be azimuthal surfaces.

The second tooth projection surface 164-2 may be planar or flat, that is, the second tooth projection surface 164-2 may lie in a plane which is perpendicular to a radial axis 128-3 which projects from the central stator axis 80 to the centre of the second tooth projection surface 164-2. In other embodiments, the second tooth projection surface 164-2 may define an arc, which is a portion of the circumference of a circle centred on the central stator axis 80, having a radius which is equal or substantially equal to the distance from the central stator axis 80 to an outer edge, or the upper tooth surface 156, of the radially outer end 22 of the tooth 14.

Between the first tooth projection surface 164-1 and the indentation surface 162 on the inner ring 12 there is a first connecting portion 166-1. Between the second tooth projection surface 164-2 and the indentation surface 162 on the inner ring 12 there is a second connecting portion 166-2. Between the projection surface 157 and the first tooth projection receiving surface 159-1 on the outer ring 26 is a third connecting portion 168-1. Between the projection surface 157 and the second tooth projection receiving surface 159-2 on the outer ring 26 is a fourth connecting portion 168-2.

Both the first connecting portion 166-1 and the third connecting portion 168-1 may comprise radial sections which are intended to be separated from each other by a clearance gap. The clearance gap may be, for example, 0.035mm. Both the second connecting portion 166-2 and the fourth connecting portion 168-2 may comprise radial sections which are intended to be separated from each other by a clearance gap. The clearance gap may be, for example, 0.035mm. The clearance gaps allow for assembly of the stator 10 with reduced deformation in the inner ring 12 and/or outer ring 26.

Therefore, the interference fit between the inner ring 12 and the outer ring 26 is limited to the indentation surface 162 at the radially outer end 22 of a tooth 14 of the inner ring 12 and the projection surface 157 on the outer ring 26.

Figure 23 shows an alternative arrangement of the radially outer end 22 of a tooth 14 of the inner ring 12. This modification may be applied to any of the arrangements illustrated in figures 1 to 13. Each tooth 14 of the stator may take the same form, though in some embodiments, one or more tooth 14 may be of a different form and may be used to assist in the location of the inner ring 12 of the stator 10 in the outer ring 26 of the stator 10.

In the embodiment shown in figure 23, the radially outer end 22 of the tooth 14 comprises a first locating feature in the form of a projection 260 in the upper tooth surface 256. The projection 260 is bounded, particularly circumferentially bounded, at the radially outer end 22 of the tooth 14, by two tooth recesses 252-1, 252-2 which are formed when the projection 260 is formed during manufacture. The projection 260 provides a locating and/or retention feature when adjacent to or abutting a corresponding second locating feature formed as part of the outer ring 26, for example a corresponding second locating feature in the form of an indentation surface 257 at an indentation 261 in the inner surface 255 of the outer ring 26, as shown in figure 24.

The edges of the radially outer end 22 of the tooth 14 may be rounded, for example, by being formed with radius corners, to maintain a smooth surface for the insertion of the windings 24 during manufacture of the stator 10. Similarly, the edges of the projection 260 may be rounded, for example, by being formed with radius corners, to maintain a smooth surface for the insertion of the windings 24 during manufacture of the stator 10.

The projection 260 in the upper tooth surface 256 of the tooth 14 may comprise a projection surface 262 in a central portion of the radially outer end 22 of the tooth 14, the projection surface 262 having a corresponding feature of the outer ring 26 in the form of an indentation 261 having an indentation surface 257, where the indentation surface 257 is recessed into the inner surface 255 of the outer ring 26 as illustrated in figure 24, the indentation 261 being configured to receive the projection 260. The indentation surface 257 may abut or be in an interference fit with the projection surface 262. In an interference arrangement the interference fit may be at least 0.035mm. The projection surface 162 and the indentation surface 257 may be considered to be azimuthal surfaces.

In some embodiments, the projection surface 262 may be planar or flat and may lie on a plane parallel to a width 254 of the tooth 14, that is, the projection surface 262 may lie in a plane which is perpendicular to a radial axis 228-1 which projects from the central stator axis 80 to the centre of the projection surface 262. In other embodiments, the projection surface 262 may define an arc, which is a portion of the circumference of a circle centred on the central stator axis 80, having a radius which is equal to or substantially equal to the distance from the central stator axis 80 to an outer edge, or the upper tooth surface 256, of the radially outer end 22 of the tooth 14.

The two tooth recesses 252-1, 252-2 are radially closer to the central stator axis 80 than the projection surface 262 of the projection 260. The first tooth recess 252-1 has a first tooth recess surface 264-1. The first tooth recess surface 264-1 has a corresponding feature on the outer ring 26 in the form of a first tooth recess receiving surface 259-1. The first tooth recess surface 264-1 may be considered to be an azimuthal surface.

The first tooth recess surface 264-1 may be planar or flat, that is, the first tooth recess surface 264-1 may lie in a plane which is perpendicular to a radial axis 228-2 which projects from the central stator axis 80 to the centre of the first tooth recess surface 264-1. In other embodiments, the first tooth recess surface 264-1 may define an arc, which is a portion of the circumference of a circle centred on the central stator axis 80, having a radius which is less than the distance from the central stator axis 80 to an outer edge, or the upper tooth surface 256, of the radially outer end 22 of the tooth 14.

The second tooth recess 252-2 has a second tooth recess surface 264-2. The second tooth recess surface 264-2 has a corresponding feature on the outer ring 26 in the form of a second tooth recess receiving surface 259-2. The second tooth recess surface 264-2 may be considered to be an azimuthal surface.

The second tooth recess surface 264-2 may be planar or flat, that is, the second tooth recess surface 264-2 may lie in a plane which is perpendicular to a radial axis 228-3 which projects from the central stator axis 80 to the centre of the second tooth recess surface 264-2. In other embodiments, the second tooth recess surface 264-2 may define an arc, which is a portion of the circumference of a circle centred on the central stator axis 80, having a radius which is less than the distance from the central stator axis 80 to an outer edge, or the upper tooth surface 256, of the radially outer end 22 of the tooth 14.

Between the first tooth recess surface 264-1 and the projection surface 262 on the inner ring 12 there is a first connecting portion 266-1. Between the second tooth recess surface 264-2 and the projection surface 262 on the inner ring 12 there is a second connecting portion 266-2. Between the indentation surface 257 and the first tooth recess receiving surface 259-1 on the outer ring 26 is a third connecting portion 268-1. Between the indentation surface 257 and the second tooth recess receiving surface 259-2 on the outer ring 26 is a fourth connecting portion 268-2.

Both the first connecting portion 266-1 and the third connecting portion 268-1 may comprise radial sections which are intended to be separated from each other by a clearance gap. The clearance gap may be, for example, 0.035mm. Both the second connecting portion 266-2 and the fourth connecting portion 268-2 may comprise radial sections which are intended to be separated from each other by a clearance gap. The clearance gap may be, for example, 0.035mm. The clearance gaps allow for assembly of the stator 10 with reduced deformation in the inner ring 12 and/or outer ring 26.

Therefore, the interference fit between the inner ring 12 and the outer ring 26 is limited to the projection surface 262 at the radially outer end 22 of a tooth 14 of the inner ring 12 and the indentation surface 257 on the outer ring 26.

It will be noted that the various arrangements of the radially outer ends of the teeth 14 described above can be implemented on any of the teeth 14, 114, 214, 314, 414 described above in relation to arrangements of the stator 10 having various configurations of material bridges 116, 117, 119 as previously described.

The slots 20 in the various herein described stator arrangements are arranged or configured to receive electrical windings 24 through an open end of the slot 20, that end being at the top 506, 606 of the slot 20. The windings 24 are generally of a consistent width such that a slot 20 with a width slightly larger than the windings 24 can accommodate the windings 24. Therefore, in some embodiments a slot 20 with parallel side walls can be provided to receive the windings 24.

In order to insulate the windings 24 a slot liner formed of an insulation paper material, examples of which include polyvinyl chloride, polyethylene terephthalate, polyether ether ketone, or synthetic aromatic polyamide polymer, separates the windings 24 from the inner surface 502 of the slots 20.

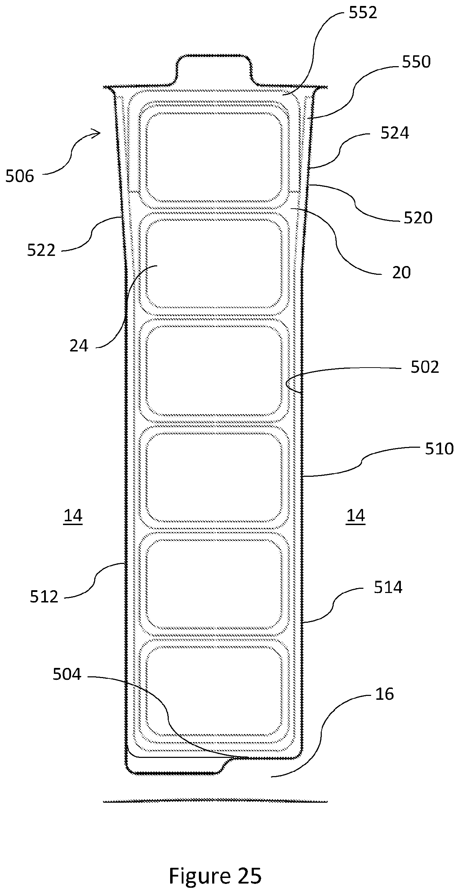

In some embodiments, as illustrated in figure 25, figure 26, and figure 27, the slot 20 is configured with tapered walls at the top 506, 606 of the slot 20, where the top 506, 606 of the slot 20 is an open end of the slot 20. The open end of the slot 20 is the part of the slot 20 which is most distal from the central stator axis 80, that is, the radially outer end of the slot 20.

Figure 25 illustrates a slot configuration according to some embodiments where insulation paper material may be more easily accommodated and/or retained. The slot 20 is configured to receive the windings 24, a first slot liner 550, and a second slot liner 552. The slot liners 550, 552 are formed of insulating paper material. The second slot liner 552 may be smaller than the first slot liner 550.

Slot 20 comprises a first section 510 and a second section 520. The first section 510 of the slot 20 comprises two parallel walls 512, 514 which extend from the material bridge 16 at the base 504 of the slot 20, part way towards the top 506 of the slot 20. In some embodiments the two parallel walls 512, 514 extend over half of the depth of the slot 20. In some embodiments the two parallel walls 512, 514 extend over two thirds of the depth of the slot 20. In some embodiments the two parallel walls 512, 514 extend over three quarters of the depth of the slot 20.

The second section 520 of the slot 20 comprises two first tapered walls, the first tapered walls being diverging walls 522, 524 which extend from the end of the parallel walls 512, 514 furthest from the material bridge 16, that is, the end which is most radially distal from the central stator axis 80, to the top 506 of the slot 20, or to a position approximately at the top 506 of the slot 20. In some embodiments, as shown in figure 25, the width, or separation, between the two diverging walls 522, 524 increases linearly with distance from the top end of the parallel walls 512, 514 to the top 506 of the slot 20, or to a position approximately at the top 506 of the slot 20. In alternative embodiments the width, or separation, between the two diverging walls 522, 524 increases non-linearly, or in a non-linear manner, with distance from the top end of the parallel walls 512, 514 to the top 506 of the slot 20, or to a position approximately at the top 506 of the slot 20. The top end of the parallel walls 512, 514 is the end of the parallel walls 512, 514 which is furthest from the material bridge 16, that is, the most radially distal end of the parallel walls 512, 514. The larger opening formed at the top 506 of the slot 20 improves the efficiency of insertion of the windings 24. The larger opening formed at the top 506 of the slot 20 may improve the fitment of the second slot liner 552.

In figure 25, a first slot liner 550 is positioned within the slot 20 to cover the inner surface 502 of the slot 20, that is, the inner sides and inner base surfaces of the slot 20. The first slot liner 550 is positioned to cover the inner sides of the parallel walls 512, 514 and the inner sides of the diverging walls 522, 524. In this way the windings 24 are not in direct contact with the inner surface 502 of the slot 20 of the stator 10. The windings 24 are positioned within the first slot liner 550.

A second slot liner 552 is positioned in the slot 20 over the top of the windings 24, that is the end of the windings 24 at the top 506 of the slot 20, and partially along the sides of the windings 24. The first slot liner 550 overlaps the outside of the second slot liner 552, thereby providing a double layer of insulating paper material at the location of the diverging walls 522, 524 of the slot 20. The first slot liner 550 and the second slot liner 552 cover the windings 24 to prevent contact between the windings 24 and the inner surface 502 of the slot 20.

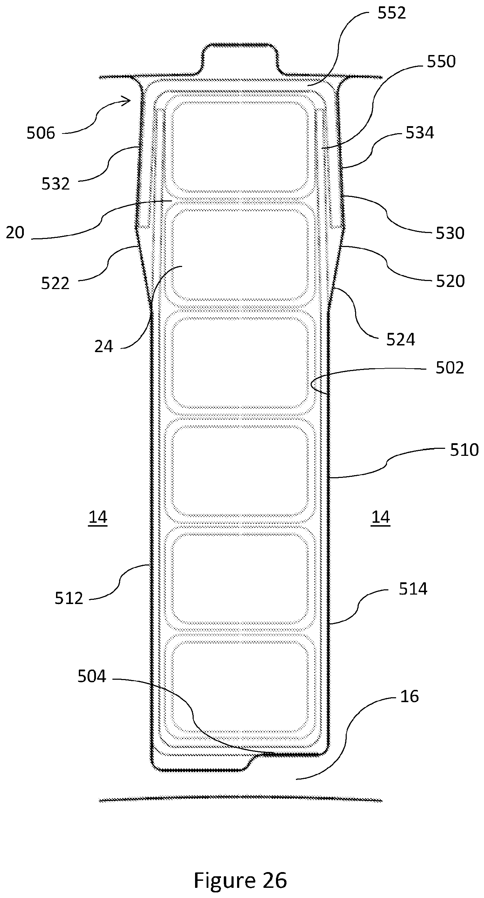

Figure 26 illustrates a variation of the slot configuration of Figure 25. Figure 26 illustrates a slot configuration according to some embodiments where insulation paper material may be more easily accommodated and/or retained. The slot 20 is configured to receive the windings 24, a first slot liner 550, and a second slot liner 552. The slot liners 550, 552 are formed of insulating paper material. The second slot liner 552 may be smaller than the first slot liner 550.

Slot 20 comprises a first section 510, a second section 520, and a third section 530. The first section 510 of the slot 20 comprises two parallel walls 512, 514 which extend from the material bridge 16 at the base 504 of the slot 20, part way towards the top 506 of the slot 20. In some embodiments the two parallel walls 512, 514 extend over half of the depth of the slot 20. In some embodiments the two parallel walls 512, 514 extend over two thirds of the depth of the slot 20. In some embodiments the two parallel walls 512, 514 extend over three quarters of the depth of the slot 20.

The second section 520 of the slot 20 comprises two first tapered walls, the first tapered walls being two diverging walls 522, 524 which extend from the end of the parallel walls 512, 514 furthest from the material bridge 16, that is, the end which is most radially distal from the central stator axis 80, towards the top 506 of the slot 20 and towards the third section 530 of the slot 20. In some embodiments, as shown in figure 26, the width between the two diverging walls 522, 524 increases linearly with distance from the top end of the parallel walls 512, 514 to the top end of the two diverging walls 522, 524. In alternative embodiments the width between the two diverging walls 522, 524 increases non-linearly, or in a non-linear manner, with distance from the top end of the parallel walls 512, 514 to the top end of the two diverging walls 522, 524. The top end of the parallel walls 512, 514 is the end of the parallel walls 512, 514 which is furthest from the material bridge 16, that is, the most radially distal end of the parallel walls 512, 514, and the top end of the two diverging walls 522, 524 is the end of the diverging walls 522, 524 which is furthest from the material bridge 16, that is, the most radially distal end of the diverging walls 522, 524.

Additional to the embodiment illustrated in figure 25, the slot 20 comprises a third section 530. The third section 530 of the slot 20 comprises two second tapered walls, the second tapered walls being two converging walls 532, 534 which extend from the end of the two diverging walls 522, 524 furthest from the material bridge 16, that is, the end most radially distal from the central stator axis 80, to the top 506 of the slot 20, or to a position approximately at the top 506 of the slot 20. In some embodiments, as shown in figure 26, the width between the two converging walls 532, 534 decreases linearly with distance from the top end of the two diverging walls 522, 524 to the top 506 of the slot 20, or to a position approximately at the top 506 of the slot 20. In alternative embodiments the width between the two converging walls 532, 534 decreases non-linearly, or in a non-linear manner, with distance from the top end of the two diverging walls 522, 524 to the top 506 of the slot 20, or to a position approximately at the top 506 of the slot 20. In some embodiments the width of the opening at the top 506 of the slot 20 is larger than the width between the two parallel walls 512, 514 of the slot 20.

This arrangement provides a way of shaping the slot such that it improves the efficiency of insertion of the windings 24, whilst the narrowing of the slot towards the top 506 of the slot 20 provides for better accommodation and retention of the second slot liner 552 in the slot 20.

In figure 26, a first slot liner 550 is positioned within the slot 20 to cover the sides and base of the windings 24 positioned in the slot 20. The first slot liner 550 is positioned to cover the inner sides of the parallel walls 512, 514 and be retained within the inner sides of the diverging walls 522, 524 and converging walls 532, 534. In this way the windings 24 are not in direct contact with the inner surface 502 of the slot 20 of the stator 10. The windings 24 are positioned within the first slot liner 550.

A second slot liner 552, which may be smaller than the first slot liner 550, is positioned in the slot 20 over the top of the windings 24, that is the end of the windings 24 at the top 506 of the slot 20, and over the top of the first slot liner 550 and partially along the sides of the windings 24. The second slot liner 552 overlaps the outside of the first slot liner 550, thereby providing a double layer of insulating paper material at the location of the converging walls 532, 534 of the slot 20. The first slot liner 550 and the second slot liner 552 cover the windings 24 to prevent contact between the windings 24 and the inner surface 502 of the slot 20.

This configuration provides a more regimented, or controlled, approach to the location of the second slot liner 552 and may also improve magnetic efficiency.

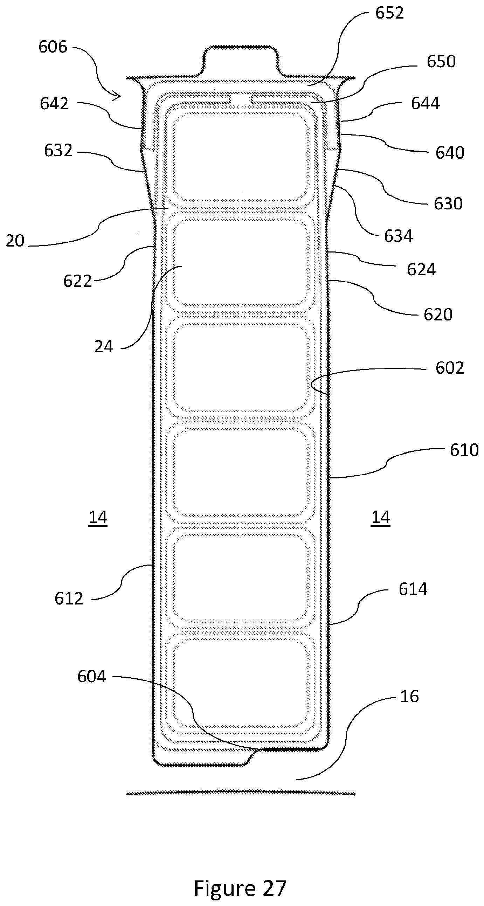

Figure 27 illustrates an alternative slot configuration according to some embodiments where insulation paper material may be more easily accommodated. The slot 20 is configured to receive the windings 24, a first slot liner 650, and a second slot liner 652. The slot liners 650, 652 are formed of insulating paper material. The second slot liner 652 may be smaller than the first slot liner 650.

Slot 20 comprises a first section 610, a second section 620, a third section 630, and a fourth section 640. The first section 610 of the slot 20 comprises two parallel walls 612, 614 which extend from the material bridge 16 at the base 604 of the slot 20, part way towards the top 606 of the slot 20. In some embodiments the two parallel walls 612, 614 extend over half of the depth of the slot 20. In some embodiments the two parallel walls 612, 614 extend over two thirds of the depth of the slot 20. In some embodiments the two parallel walls 612, 614 extend over three quarters of the depth of the slot 20.

The second section 620 of the slot 20 comprises two first tapered walls, the first tapered walls being two converging walls 622, 624 which extend from the end of the parallel walls 612, 614 furthest from the material bridge 16, that is, the end which is most radially distal from the central stator axis 80, towards the top 606 of the slot 20 and towards the third section 630 of the slot 20. In some embodiments, as shown in figure 27, the width between the two converging walls 622, 624 decreases linearly with distance from the top end of the parallel walls 612, 614 to the top end of the two converging walls 622, 624. In alternative embodiments the width between the two converging walls 622, 624 decreases non-linearly, or in a non-linear manner, with distance from the top end of the parallel walls 612, 614 to the top end of the two converging walls 622, 624. The top end of the two converging walls 622, 624 is the end of the two converging walls 622, 624 which is furthest from the material bridge 16, that is, the end which is most radially distal from the central stator axis 80.

The third section 630 of the slot 20 comprises two second tapered walls, the second tapered walls being two diverging walls 632, 634 which extend from the end of the two converging walls 622, 624 furthest from the material bridge 16 towards the top 606 of the slot 20 and towards the fourth section 640 of the slot 20. In some embodiments, as shown in figure 27, the width between the two diverging walls 632, 634 increases linearly with distance from the top end of the two converging walls 622, 624 to the top end of the two diverging walls 632, 634. In alternative embodiments the width between the two diverging walls 632, 634 increases non-linearly, or in a non-linear manner, with distance from the top end of the two converging walls 622, 624 to the top end of the two diverging walls 632, 634. The top end of the two converging walls 622, 624 is the end of the two converging walls 622, 624 which is furthest from the material bridge 16, that is, the end which is most radially distal from the central stator axis 80, and the top end of the two diverging walls 632, 634 is the end of the diverging walls 632, 634 which is furthest from the material bridge 16, that is, the end which is most radially distal from the central stator axis 80.

The fourth section 640 of the slot 20 comprises two third tapered walls, the third tapered walls being two converging walls 642, 644 which extend from the end of the two diverging walls 632, 634 furthest from the material bridge 16 to the top 606 of the slot 20, or to a position approximately at the top 606 of the slot 20. In some embodiments, as shown in figure 27, the width between the two converging walls 642, 644 decreases linearly with distance from the top end of the two diverging walls 632, 634 to the top 606 of the slot 20, or to a position approximately at the top 606 of the slot 20. In alternative embodiments the width between the two converging walls 642, 644 decreases non-linearly, or in a non-linear manner, with distance from the top end of the two diverging walls 632, 634 to the top 606 of the slot 20, or to a position approximately at the top 606 of the slot 20. The top end of the two diverging walls 632, 634 is the end of the two diverging walls 632, 634 which is furthest from the material bridge 16, that is, the end which is most radially distal from the central stator axis 80. In some embodiments the width of the opening at the top 606 of the slot 20 is larger than the width between the two parallel walls 512, 514 of the slot 20.

This arrangement improves the efficiency of insertion of the windings 24, whilst the narrowing of the slot towards the top 606 of the slot 20 provides for better retention of the second slot liner 652 in the slot 20. This configuration can offer increased magnetic efficiency, a more regimented, or controlled, approach to the location of the second slot liner 652, but it is preferred when the first slot liner 650 is pre-shaped (or pre-creased) in specific positions.

In figure 27, a first slot liner 650 is positioned within the slot 20 to cover the sides and base of the windings 24 positioned in the slot 20 and to partially cover the top of the windings 24 positioned in the slot 20. The first slot liner 650 is positioned to cover the inner sides of the parallel walls 612, 614, inner sides of the converging walls 622, 624 of the second section 620 and be retained within the inner sides of the diverging walls 632, 634 of the third section 630 and converging walls 642, 644 of the fourth section 640. In this way the windings 24 are not in direct contact with the inner surface 602 of the slot 20 of the stator 10. The windings 24 are positioned within the first slot liner 650.

A second slot liner 652 is positioned in the slot 20 over the top of the windings 24, that is the end of the windings 24 at the top 606 of the slot 20, and over the top of the first slot liner 650 and partially along the sides of the windings 24. The second slot liner 652 overlaps the outside of the first slot liner 650, thereby providing a double layer of insulating paper material at the location of the converging walls 642, 644 of the slot 20. The first slot liner 650 and the second slot liner 652 cover the windings 24 to prevent contact between the windings 24 and the inner surface 602 of the slot 20.

In all preceding designs of the slot 20, the first slot liner 550, 650 is inserted before the process of winding 24 insertion commences. The first slot liner 550, 650 may be segmented, that is, one liner per slot 20, or continuous, that is, one liner for all slots 20. Once all of the windings 24 have been inserted, in the case of a continuous first liner 550, 650, cuts are made in the continuous first liner 550, 650 to discard superfluous parts. Subsequently, the second slot liner 552, 652 is shaped and inserted in the slot 20 over the windings 24.

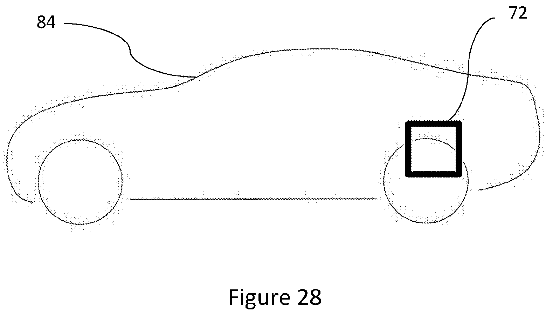

Figure 28 illustrates a vehicle 84 with an electric machine 72 as described above, where that electric machine 72 comprises a stator 10 as described above.

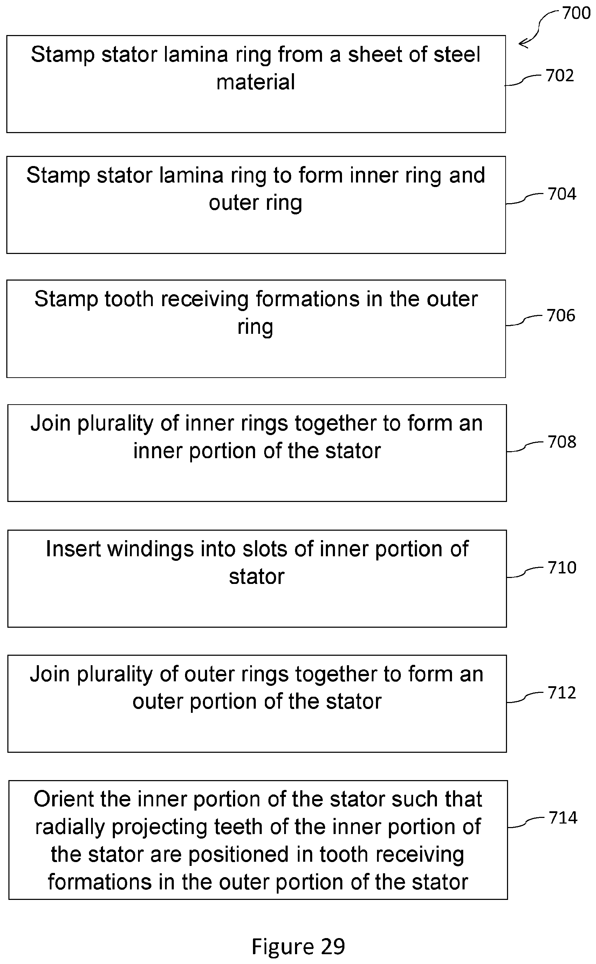

Figure 29 shows a flow diagram 700 for the manufacturing of a stator 10, wherein the stator 10 is as described above in relation to embodiments where the teeth 14 are located on the inner ring 12 of the stator 10.

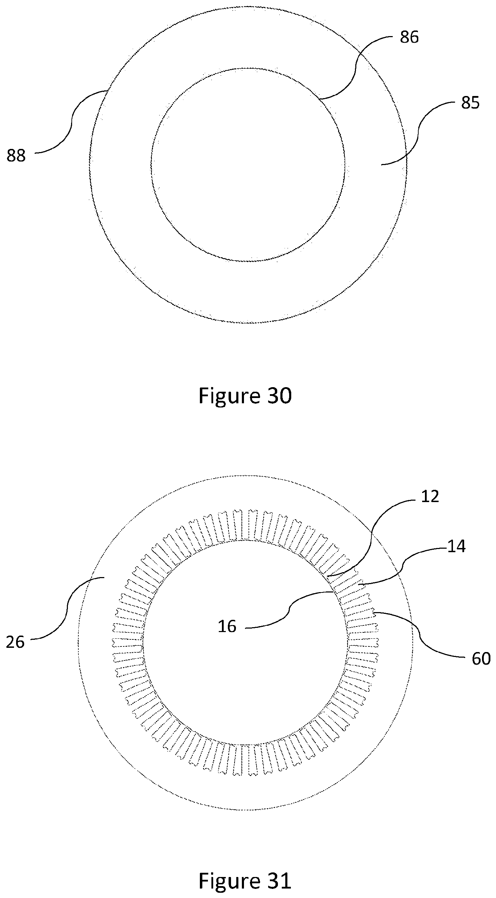

At block 702 a stator lamina ring 85 is cut or stamped from a sheet of steel material, the stator lamina ring 85 having a circular inner surface 86 and a substantially circular outer surface 88. Figure 30 illustrates the stamped stator lamina ring 85, comprising a ring of sheet steel material.

In some stator arrangements the outer surface 88 may be oblate or comprise features which project from, or into, the outer surface 88 of the stator 10. Such deviations from a circular outer surface 88 may reduce or prevent the possibility of the stator 10 rotating in a stator housing, where the stator housing houses the stator 10 and is affixed to a vehicle 84.

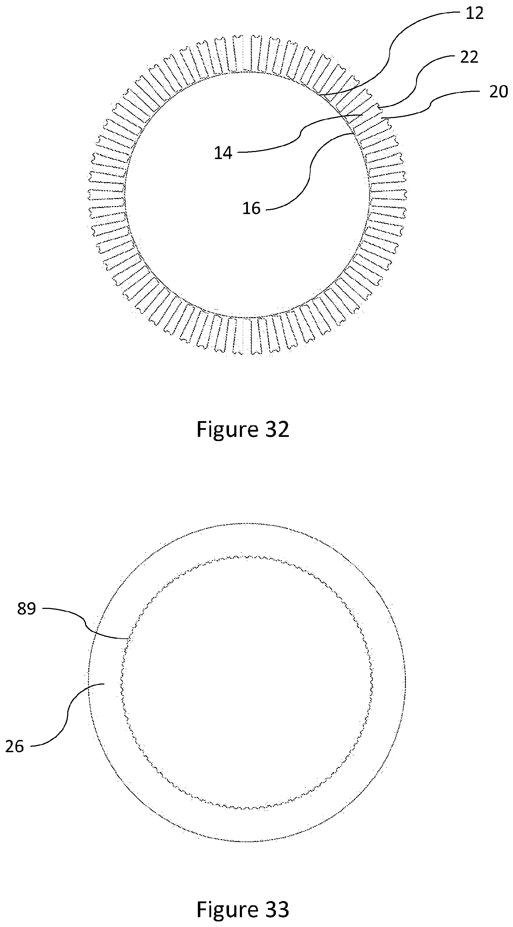

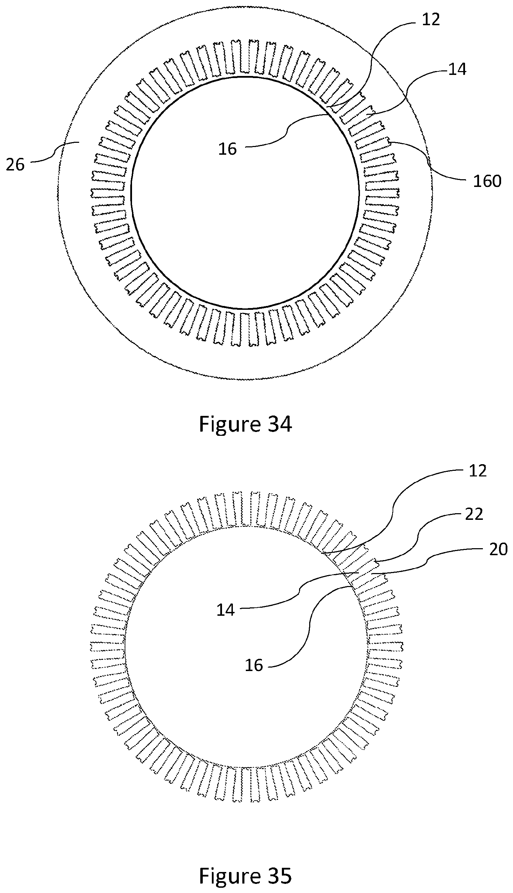

At block 704 the stator lamina ring 85 is stamped to form the inner ring 12 and an outer ring 26, as illustrated in the two examples of figures 31 and 34. The inner ring 12 comprises a plurality of radially projecting teeth 14, each tooth 14 being connected to adjacent teeth 14 by respective material bridges 16 at radially inner ends 18 of the teeth 14, and being separated from the adjacent teeth 14 by respective slots 20, wherein the slots 20 of the inner ring 12 are open at radially outer ends 22 of the teeth 14. The inner ring 12, illustrated in figure 32, is complete following the stamping of the stator lamina ring 85 at block 704 as shown in figure 31. The inner ring 12, illustrated in figure 35, is complete following the stamping of the stator lamina ring 85 at block 704 as shown in figure 34. The inner ring 12 may be of a form as previously described, and have teeth 14 of various forms.

In some embodiments, at least some of the material bridges 16 are asymmetric in shape. In other embodiments all of the material bridges 16 are symmetric in shape.

In some embodiments, the radially outer end 22 of each tooth 14 is formed with a semi-elliptical surface 52. When the inner ring 12 is cut or stamped from the stator lamina ring 85 this leaves the outer ring 26. The outer ring 26 will then have semi-elliptical formations on its inner surface corresponding to the semi-elliptical surfaces 52 of the teeth 14 of the inner ring 12.

In some embodiments, in particular that illustrated in figure 31, the radially outer end 22 of each tooth 14 is formed with a semi-elliptical surface 52 having an indentation 60 in the semi-elliptical surface 52. When the inner ring 12 is cut or stamped from the stator lamina ring 85 this leaves the outer ring 26. The outer ring 26 will then have semi-elliptical formations each with a projection from the semi-elliptical surface 52 on its inner surface corresponding to the semi-elliptical surfaces 52, with indentations 60, of the teeth 14 of the inner ring 12.

In some embodiments, in particular that illustrated in figure 34, the inner ring 12 is formed to comprise teeth 14 of the form shown in figure 21, each tooth comprising a first locating feature in the form of an indentation 160 in the upper tooth surface 156, where the indentation 160 comprises radial sections at either side of the indentation 160. The indentation 160 is configured to receive a corresponding projection 157 of the outer ring 26 as previously described, the projection 157 having radial sections at either side of the projection 157. The radial sections of the indentations 160 and the projections 157 are intended to be positioned or collocated such that there is a clearance gap between the radial sections of the indentation 160 and corresponding radial sections of the projection 157. The clearance gaps allow for assembly of the stator 10 with reduced deformation in the inner ring 12 and/or outer ring 26.

In alternative embodiments, the inner ring 12 is formed to comprise teeth 14 of the form shown in figure 23, each tooth comprising a first locating feature in the form of an projection 260 in the upper tooth surface 256, where the projection 260 comprises radial sections at either side of the projection 260. The projection 260 is configured to be received in a corresponding indentation 261 of the outer ring 26 as previously described, the indentation 261 having radial sections at either side of the indentation 261. The radial sections of the projection 260 and the indentation 261 are intended to be positioned or collocated such that there is a clearance gap between the radial sections of the projection 260 and corresponding radial sections of the indentation 261. The clearance gaps allow for assembly of the stator 10 with reduced deformation in the inner ring 12 and/or outer ring 26.

At block 706 tooth receiving formations 89 are cut or stamped in the outer ring 26, corresponding to the shape of the radially outer ends 22 of the teeth 14 of the inner ring 12, the tooth receiving formations 89 being stamped in between formations in the outer ring 26 which are, or have been previously, formed by the stamping of the radially outer ends 22 of the teeth 14 of the inner ring 12 from the stator lamina ring 85. The resulting outer ring 26 is illustrated in figure 33, with example tooth receiving formations 89 being illustrated in the magnified view of figure 20.

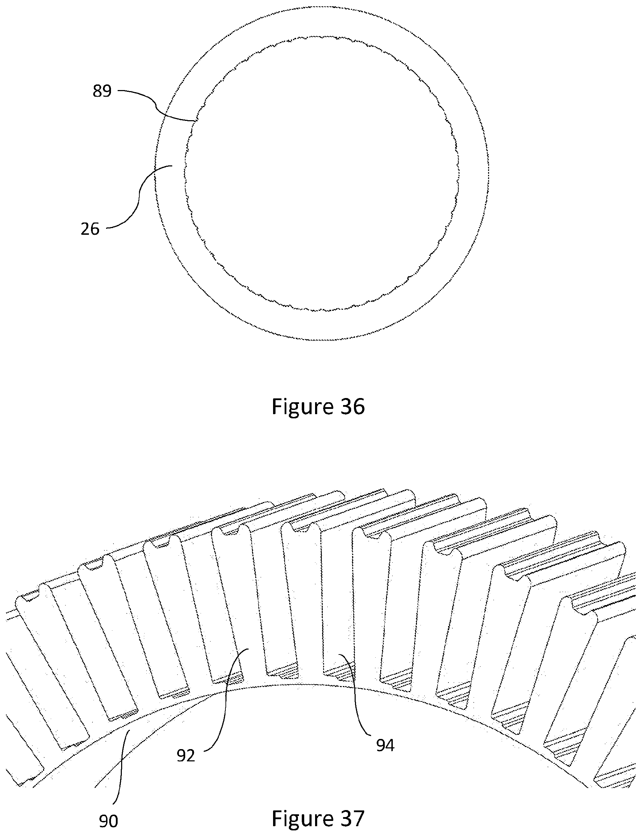

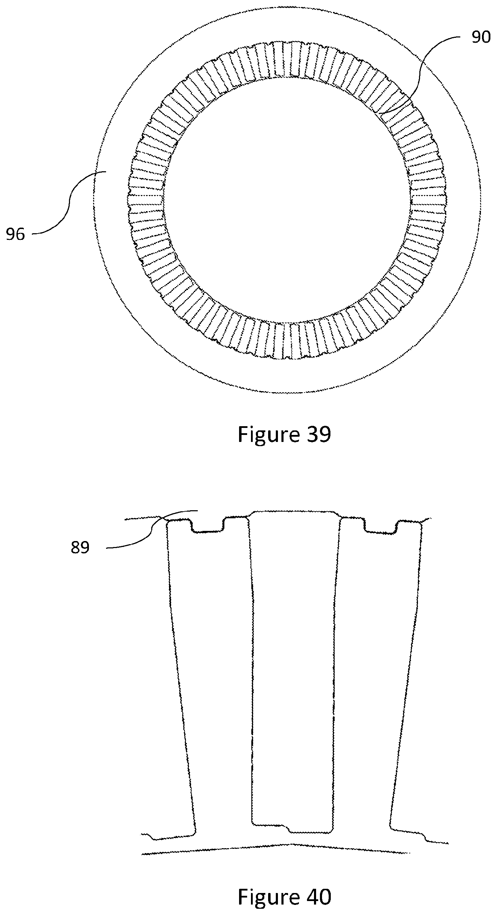

In an alternative process at block 706, tooth receiving formations 89 are cut or stamped in the outer ring corresponding to the shape of the radially outer ends 22 of the teeth of the inner ring 12, the tooth receiving formations 89 being stamped in between formations in the outer ring 26 which are, or have been previously, formed by the stamping of the radially outer ends 22 of the teeth 14 of the inner ring 12 from the stator lamina ring 85. The formations in the outer ring 26 which are, or have been previously, formed by the stamping of the radially outer ends 22 of the teeth 14 of the inner ring 12 from the stator lamina ring 85 are shaped further to provide cavities which will be located between the tooth receiving formations 89, to be located above the slots 20 in an assembled stator arrangement 10. Those cavities may be suitable for the transit of a coolant, such as oil, past the location of the windings 24. The resulting outer ring 26 is illustrated in figure 36, with example tooth receiving formations 89 being illustrated, in situ with teeth 14 of the inner ring 12, in the magnified view of figure 40.

At block 708 a plurality of inner rings 12 are joined together to form an inner portion 90 of the stator 10, where each of the radially projecting teeth 14 on each of the inner rings 12 overlay corresponding radially projecting teeth 14 on each adjacent inner ring 12, forming elongate radially projecting teeth 92 and elongate slots 94 in the inner portion of the stator 10, as illustrated in figure 37.

At block 710 windings are inserted into the elongate slots 94 of the inner portion 90 of the stator 10.

At block 712 a plurality of outer rings are joined together to form an outer portion 96 of the stator, where each of the tooth receiving formations 89 on each of the outer rings overlay corresponding tooth receiving formations 89 on each adjacent outer ring to form elongate tooth receiving portions 98.

At block 714 the inner portion of the stator is oriented such that the elongate radially projecting teeth 92 of the inner portion 90 of the stator 10 are positioned in the elongate tooth receiving formations 98 in the outer portion 96 of the stator 10. That is, the inner portion 90 of the stator 10 is rotated half a slot width before being engaged with the outer portion 96 of the stator 10.

In embodiments where the radially outer end 22 of each tooth 14 is formed with a semi-elliptical surface 52, the corresponding semi-elliptical formations on the inner surface of the outer ring 26 will form the surfaces to which the windings 24 in the slots 20 will abut, since the inner ring 12 is rotated half a slot pitch before being engaged with the outer ring 26. Cooling of the stator 10 may be provided by a coolant, e.g. oil, passing through each winding slot 20, where the semi-elliptical spaces above the windings 24 formed by the corresponding cutouts of the semi-elliptical surfaces of the teeth 14 can provide coolant channels.

In embodiments where the radially outer end 22 of each tooth 14 is formed with a semi-elliptical surface 52 having an indentation 60 in the semi-elliptical surface 52, the corresponding semi-elliptical formations with a projection from the semi-elliptical surface 52 on the inner surface of the outer ring 26 will form the surfaces to which the windings 24 in the slots 20 will abut, since the inner ring 12 is rotated half a slot pitch before being engaged with the outer ring 26. So, when the inner ring 12 is rotated to be inserted into an adjacent cutout on the outer ring 26, the windings 24, which are inserted into the slot 20, can abut the projection 57 of the tooth receiving formation 89 on the outer ring 26 thereby providing better thermal contact with the outer ring 26. This thermal contact is advantageous when stator cooling is applied via a water jacket surrounding the stator 10. In other embodiments, where water jacket cooling is not performed, the cooling may alternatively be provided by a coolant, e.g. oil, passing through each winding slot 20, where the spaces above the windings 24 formed by the cutouts in the outer ring 26 corresponding to the semi-elliptical surfaces 52 with indentations 60 of the teeth 14 can provide coolant channels. Figure 36 illustrates a cross section of a stator 10 formed by the above method.

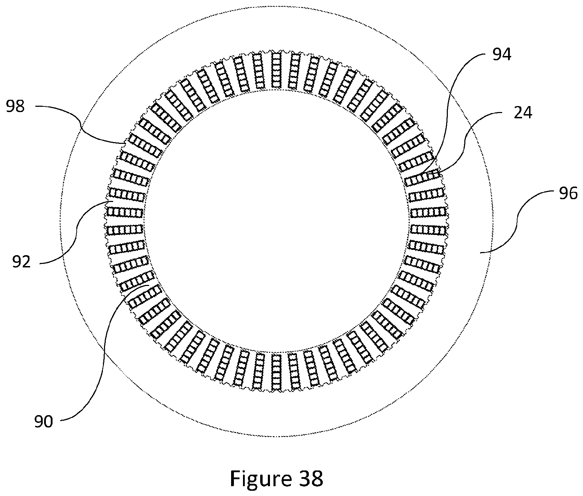

An assembled stator formed from the components shown in figures 35 and 36 is illustrated in figure 37 (windings 24 are not shown for clarity), and a magnified section of the assembled stator is illustrated in figure 38 (windings 24 are not shown for clarity).

The blocks illustrated in figure 29 may represent steps in a method. The illustration of a particular order to the blocks does not necessarily imply that there is a required or preferred order for the blocks and the order and arrangement of the blocks may be varied. Furthermore, it may be possible for some blocks to be omitted.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. A stator (10) comprising:
an inner ring (12), the inner ring (12) comprising a plurality of radially projecting teeth (14) and a plurality of material bridges (16), the radially projecting teeth (14) and material bridges being formed from the same sheet lamina, each tooth (14) being connected to adjacent teeth (14) by respective material bridges (16) at radially inner ends (18) of the teeth (14), and being separated from the adjacent teeth (14) by respective slots (20), wherein the slots (20) of the inner ring (12) are open at radially outer ends (22) of the teeth (14); and
an outer ring (26), the outer ring located at the radially outer ends of the teeth;
wherein at least some of the material bridges (16) are asymmetric in shape; and
wherein each asymmetric material bridge (16) comprises a first portion (30) comprising a first surface (32) inside the slot (20) extending from a first one of the teeth (14-1) towards a second one of the teeth (14-2), a second portion (34) comprising a second surface (36) inside the slot (20) extending from the second one of the teeth (14-2) towards the first one of the teeth (14-1), and a third portion (38) extending from the first portion (30) to the second portion (34) wherein the third portion (38) comprises a third surface (39) between the first surface (32) and the second surface (36), wherein the first surface (32) is radially separated from the second surface (36), the first surface (32) providing an upper step, configured to support windings in use, and the second surface (36) providing a lower step, configured to be separated from the windings in use, thereby forming a cooling channel (37) in the asymmetric material bridge (16).

2. A stator (10) according to claim 1, wherein all of the material bridges (16) are asymmetric in shape.

3. A stator (10) according to any preceding claim, wherein the radially outer end (22) of each tooth (14) has, at least in part, a semi-elliptical surface (52), optionally wherein the semi-elliptical surface has a first diameter D, with ends which are contiguous with a respective surface (58) of the radially projecting tooth (14), and a second diameter d in a range from 0.05D to 2D.

4. A stator (10) according to claim 3, wherein the radially outer end (22) of each tooth (14) comprises an indentation (60) in the semi-elliptical surface (52), optionally wherein the indentation (60) comprises a flat surface (62) in a central portion of the radially outer end (22) of the tooth (14).

5. A stator (10) according to any preceding claim, wherein the stator (10) comprises:
an inner portion (90) comprising a plurality of inner rings (12), wherein each of the radially projecting teeth (14) on each of the inner rings (12) overlay corresponding radially projecting teeth (14) on each adjacent inner ring (12), forming elongate radially projecting teeth (92) and elongate slots (94) in the inner portion (90) of the stator (10).

6. A stator (10) according to claim 5, wherein the stator (10) comprises:
an outer portion (96) comprising a plurality of outer rings (26).

7. A stator (10) according to any preceding claim, wherein the outer ring (26) comprises a plurality of tooth receiving formations (89).

8. An electric machine (72) comprising a stator (10) as claimed in any one of the preceding claims and a rotor (76).

9. An electric machine (72) according to claim 8, wherein a thinner portion of each of the asymmetric material bridges is located, in use, at the leading edge (78) of the respective asymmetric material bridges (16) in the direction of rotation of the rotor (76).

10. A vehicle (84) comprising one or more electric machines (72) as claimed in claim 8 or claim 9.

11. A method of manufacture of a stator (10) comprising:
stamping a stator lamina ring (85) to form an inner ring (12) and an outer ring (26), the inner ring (12) comprising a plurality of radially projecting teeth (14) and a plurality of material bridges (16), the radially projecting teeth (14) and material bridges (16) being formed from the same sheet lamina, each tooth (14) being connected to adjacent teeth (14) by respective material bridges (16) at radially inner ends (18) of the teeth (14), and being separated from the adjacent teeth (14) by respective slots (20), wherein the slots (20) of the inner ring (12) are open at radially outer ends (22) of the teeth (14);
wherein at least some of the material bridges (16) are asymmetric in shape; and
wherein each asymmetric material bridge (16) comprises a first portion (30) comprising a first surface (32) inside the slot (20) extending from a first one of the teeth (14-1) towards a second one of the teeth (14-2), a second portion (34) comprising a second surface (36) inside the slot (20) extending from the second one of the teeth (14-2) towards the first one of the teeth (14-1), and a third portion (38) extending from the first portion (30) to the second portion (34) wherein the third portion (38) comprises a third surface (39) between the first surface (32) and the second surface (36), wherein the first surface (32) is radially separated from the second surface (36), the first surface (32) providing an upper step, configured to support windings in use, and the second surface (36) providing a lower step, configured to be separated from the windings in use, thereby forming a cooling channel (37) in the asymmetric material bridge (16).

12. A method of manufacture of a stator (10) according to claim 11, comprising:
stamping tooth receiving formations (89) in the outer ring (26), corresponding to the shape of radially outer ends (22) of the teeth (14) of the inner ring (12), the tooth receiving formations (89) being stamped in between formations in the outer ring (26) which are formed by the stamping of the radially outer ends (22) of the teeth (14) of the inner ring (12) from the stator lamina ring (85).

13. A method of manufacture of a stator (10) according to claim 12, comprising:
joining a plurality of inner rings (12) together to form an inner portion (90) of the stator (10), where each of the radially projecting teeth (14) on each of the inner rings (12) overlay corresponding radially projecting teeth (14) on each adjacent inner ring (12), forming elongate radially projecting teeth (92) and elongate slots (94) in the inner portion (90) of the stator (10);
inserting windings into the elongate slots (94) of the inner portion (90) of the stator (10);
joining a plurality of outer rings (26) together to form an outer portion (96) of the stator (10), where each of the tooth receiving formations (89) on each of the outer rings (26) overlay corresponding tooth receiving formations (89) on each adjacent outer ring (26), forming elongate tooth receiving formations (98) in the outer portion (96) of the stator (10); and
orienting the inner portion (90) of the stator (10) such that the elongate radially projecting teeth (92) are positioned in the elongate tooth receiving formations (98) in the outer portion (96) of the stator (10).

14. A method of manufacture of a stator (10) according to any of claims 11 to 13, comprising:
stamping the stator lamina ring (85) from a sheet of steel material, the stator lamina ring (85) having a circular inner surface and a substantially circular outer surface.

## Patentansprüche

1. Stator (10), umfassend:
einen Innenring (12), wobei der Innenring (12) eine Vielzahl von radial vorstehenden Zähnen (14) und eine Vielzahl von Materialbrücken (16) umfasst, wobei die radial vorstehenden Zähne (14) und Materialbrücken aus dem gleichen Plattenblech ausgebildet sind, wobei jeder Zahn (14) mit benachbarten Zähnen (14) durch jeweilige Materialbrücken (16) an radial inneren Enden (18) der Zähne (14) verbunden ist und von den benachbarten Zähnen (14) durch jeweilige Schlitze (20) getrennt ist, wobei die Schlitze (20) des Innenrings (12) an radial äußeren Enden (22) der Zähne (14) offen sind; und
einen Außenring (26), wobei sich der Außenring an den radial äußeren Enden der Zähne befindet; wobei mindestens einige der Materialbrücken (16) der Gestalt nach asymmetrisch sind; und
wobei jede asymmetrische Materialbrücke (16) einen ersten Abschnitt (30), der eine erste Oberfläche (32) innerhalb des Schlitzes (20) umfasst, die sich von einem ersten der Zähne (14-1) zu einem zweiten der Zähne (14-2) hin erstreckt, einen zweiten Abschnitt (34), der eine zweite Oberfläche (36) innerhalb des Schlitzes (20) umfasst, die sich von dem zweiten der Zähne (14-2) zu dem ersten der Zähne (14-1) hin erstreckt, und einen dritten Abschnitt (38) umfasst, der sich von dem ersten Abschnitt (30) zu dem zweiten Abschnitt (34) erstreckt, wobei der dritte Abschnitt (38) eine dritte Oberfläche (39) zwischen der ersten Oberfläche (32) und der zweiten Oberfläche (36) umfasst, wobei die erste Oberfläche (32) radial von der zweiten Oberfläche (36) getrennt ist, die erste Oberfläche (32) eine obere Stufe bereitstellt, die dazu konfiguriert ist, Wicklungen bei Verwendung zu stützen, und die zweite Oberfläche (36) eine untere Stufe bereitstellt, die dazu konfiguriert ist, von den Wicklungen bei Verwendung getrennt zu sein, wodurch ein Kühlkanal (37) in der asymmetrischen Materialbrücke (16) ausgebildet wird.

2. Stator (10) nach Anspruch 1, wobei alle der Materialbrücken (16) der Gestalt nach asymmetrisch sind.

3. Stator (10) nach einem vorhergehenden Anspruch, wobei das radial äußere Ende (22) jedes Zahns (14) mindestens teilweise eine halbelliptische Oberfläche (52) aufweist, wobei optional die halbelliptische Oberfläche einen ersten Durchmesser D mit Enden, die an eine jeweilige Oberfläche (58) des radial vorstehenden Zahns (14) angrenzen, und einen zweiten Durchmesser d in einem Bereich von 0,05 D bis 2 D aufweist.

4. Stator (10) nach Anspruch 3, wobei das radial äußere Ende (22) jedes Zahns (14) eine Einkerbung (60) in der halbelliptischen Oberfläche (52) umfasst, wobei die Einkerbung (60) optional eine flache Oberfläche (62) in einem zentralen Abschnitt des radial äußeren Endes (22) des Zahns (14) umfasst.

5. Stator (10) nach einem vorhergehenden Anspruch, wobei der Stator (10) Folgendes umfasst: einen inneren Abschnitt (90), der eine Vielzahl von Innenringen (12) umfasst, wobei jeder der radial vorstehenden Zähne (14) an jedem der Innenringe (12) entsprechende radial vorstehende Zähne (14) an jedem benachbarten Innenring (12) überlagert, wodurch längliche radial vorstehende Zähne (92) und längliche Schlitze (94) in dem inneren Abschnitt (90) des Stators (10) ausgebildet werden.

6. Stator (10) nach Anspruch 5, wobei der Stator (10) Folgendes umfasst:
einen äußeren Abschnitt (96), der eine Vielzahl von Außenringen (26) umfasst.

7. Stator (10) nach einem vorhergehenden Anspruch, wobei der Außenring (26) eine Vielzahl von Zahnaufnahmeformationen (89) umfasst.

8. Elektrische Maschine (72), umfassend einen Stator (10) nach einem der vorhergehenden Ansprüche und einen Rotor (76).

9. Elektrische Maschine (72) nach Anspruch 8, wobei sich ein dünnerer Abschnitt jeder der asymmetrischen Materialbrücken bei Verwendung an der Vorderkante (78) der jeweiligen asymmetrischen Materialbrücken (16) in der Drehrichtung des Rotors (76) befindet.

10. Fahrzeug (84), umfassend eine oder mehrere elektrische Maschinen (72) nach Anspruch 8 oder Anspruch 9.

11. Verfahren zur Herstellung eines Stators (10), umfassend:
Stanzen eines Statorblechrings (85), um einen Innenring (12) und einen Außenring (26) auszubilden, wobei der Innenring (12) eine Vielzahl von radial vorstehenden Zähnen (14) und eine Vielzahl von Materialbrücken (16) umfasst, wobei die radial vorstehenden Zähne (14) und Materialbrücken (16) aus dem gleichen Plattenblech ausgebildet sind, wobei jeder Zahn (14) mit benachbarten Zähnen (14) durch jeweilige Materialbrücken (16) an radial inneren Enden (18) der Zähne (14) verbunden ist und von den benachbarten Zähnen (14) durch jeweilige Schlitze (20) getrennt ist, wobei die Schlitze (20) des Innenrings (12) an radial äußeren Enden (22) der Zähne (14) offen sind;
wobei mindestens einige der Materialbrücken (16) der Gestalt nach asymmetrisch sind; und
wobei jede asymmetrische Materialbrücke (16) einen ersten Abschnitt (30), der eine erste Oberfläche (32) innerhalb des Schlitzes (20) umfasst, die sich von einem ersten der Zähne (14-1) zu einem zweiten der Zähne (14-2) hin erstreckt, einen zweiten Abschnitt (34), der eine zweite Oberfläche (36) innerhalb des Schlitzes (20) umfasst, die sich von dem zweiten der Zähne (14-2) zu dem ersten der Zähne (14-1) hin erstreckt, und einen dritten Abschnitt (38) umfasst, der sich von dem ersten Abschnitt (30) zu dem zweiten Abschnitt (34) erstreckt, wobei der dritte Abschnitt (38) eine dritte Oberfläche (39) zwischen der ersten Oberfläche (32) und der zweiten Oberfläche (36) umfasst, wobei die erste Oberfläche (32) radial von der zweiten Oberfläche (36) getrennt ist, die erste Oberfläche (32) eine obere Stufe bereitstellt, die dazu konfiguriert ist, Wicklungen bei Verwendung zu stützen, und die zweite Oberfläche (36) eine untere Stufe bereitstellt, die dazu konfiguriert ist, von den Wicklungen bei Verwendung getrennt zu sein, wodurch ein Kühlkanal (37) in der asymmetrischen Materialbrücke (16) ausgebildet wird.

12. Verfahren zur Herstellung eines Stators (10) nach Anspruch 11, umfassend:
Stanzen von Zahnaufnahmeformationen (89) in dem Außenring (26), die der Gestalt der radial äußeren Enden (22) der Zähne (14) des Innenrings (12) entsprechen, wobei die Zahnaufnahmeformationen (89) zwischen Formationen in dem Außenring (26) gestanzt werden, die durch das Stanzen der radial äußeren Enden (22) der Zähne (14) des Innenrings (12) aus dem Statorblechring (85) ausgebildet sind.

13. Verfahren zur Herstellung eines Stators (10) nach Anspruch 12, umfassend:
Zusammenfügen einer Vielzahl von Innenringen (12), um einen inneren Abschnitt (90) des Stators (10) auszubilden, wobei jeder der radial vorstehenden Zähne (14) an jedem der Innenringe (12) entsprechende radial vorstehende Zähne (14) an jedem benachbarten Innenring (12) überlagert, wodurch längliche radial vorstehende Zähne (92) und längliche Schlitze (94) in dem inneren Abschnitt (90) des Stators (10) ausgebildet werden;
Einfügen von Wicklungen in die länglichen Schlitze (94) des inneren Abschnitts (90) des Stators (10);
Zusammenfügen einer Vielzahl von Außenringen (26), um einen äußeren Abschnitt (96) des Stators (10) auszubilden, wobei jede der Zahnaufnahmeformationen (89) an jedem der Außenringe (26) entsprechende Zahnaufnahmeformationen (89) an jedem benachbarten Außenring (26) überlagert, wodurch längliche Zahnaufnahmeformationen (98) in dem äußeren Abschnitt (96) des Stators (10) ausgebildet werden; und
Ausrichten des inneren Abschnitts (90) des Stators (10), sodass die länglichen radial vorstehenden Zähne (92) in den länglichen Zahnaufnahmeformationen (98) in dem äußeren Abschnitt (96) des Stators (10) positioniert sind.

14. Verfahren zur Herstellung eines Stators (10) nach einem der Ansprüche 11 bis 13, umfassend: Stanzen des Statorblechrings (85) aus einer Stahlmaterialplatte, wobei der Statorblechring (85) eine kreisförmige Innenoberfläche und eine im Wesentlichen kreisförmige Außenoberfläche aufweist.

## Revendications

1. Stator (10) comprenant :
un anneau intérieur (12), l'anneau intérieur (12) comprenant une pluralité de dents en saillie radiale (14) et une pluralité de ponts de matière (16), les dents en saillie radiale (14) et les ponts de matière étant formés à partir de la même tôle, chaque dent (14) étant reliée aux dents adjacentes (14) par des ponts de matière respectifs (16) aux extrémités radialement intérieures (18) des dents (14), et étant séparée des dents adjacentes (14) par des fentes respectives (20), dans lequel les fentes (20) de l'anneau intérieur (12) sont ouvertes aux extrémités radialement extérieures (22) des dents (14) ; et
un anneau extérieur (26), l'anneau extérieur étant situé aux extrémités radialement extérieures des dents ;
dans lequel au moins certains des ponts de matière (16) sont de forme asymétrique ; et
dans lequel chaque pont de matière asymétrique (16) comprend une première partie (30) comprenant une première surface (32) à l'intérieur de la fente (20) s'étendant d'une première des dents (14-1) à une deuxième des dents (14-2), une deuxième partie (34) comprenant une deuxième surface (36) à l'intérieur de la fente (20) s'étendant de la deuxième des dents (14-2) à la première des dents (14-1), et une troisième partie (38) s'étendant de la première partie (30) à la deuxième partie (34) dans lequel la troisième partie (38) comprend une troisième surface (39) entre la première surface (32) et la deuxième surface (36), dans lequel la première surface (32) est radialement séparée de la deuxième surface (36), la première surface (32) fournissant un gradin supérieur, configuré pour supporter des enroulements en cours d'utilisation, et la deuxième surface (36) fournissant un gradin inférieur, configuré pour être séparé des enroulements en cours d'utilisation, formant ainsi un canal de refroidissement (37) dans le pont de matière asymétrique (16).

2. Stator (10) selon la revendication 1, dans lequel tous les ponts de matière (16) sont de forme asymétrique.

3. Stator (10) selon l'une quelconque des revendications précédentes, dans lequel l'extrémité radialement extérieure (22) de chaque dent (14) a, au moins en partie, une surface semi-elliptique (52), éventuellement dans lequel la surface semi-elliptique a un premier diamètre D, avec des extrémités qui sont contiguës à une surface respective (58) de la dent en saillie radiale (14), et un second diamètre d dans une plage de 0,05D à 2D.

4. Stator (10) selon la revendication 3, dans lequel l'extrémité radialement extérieure (22) de chaque dent (14) comprend une indentation (60) dans la surface semi-elliptique (52), éventuellement dans lequel l'indentation (60) comprend une surface plate (62) dans une partie centrale de l'extrémité radialement extérieure (22) de la dent (14).

5. Stator (10) selon l'une quelconque des revendications précédentes, dans lequel le stator (10) comprend :
une partie intérieure (90) comprenant une pluralité d'anneaux intérieurs (12), dans lequel chacune des dents en saillie radiale (14) sur chacun des anneaux intérieurs (12) recouvre des dents en saillie radiale correspondantes (14) sur chaque anneau intérieur adjacent (12), formant des dents en saillie radiale allongées (92) et des fentes allongées (94) dans la partie intérieure (90) du stator (10).

6. Stator (10) selon la revendication 5, dans lequel le stator (10) comprend :
une partie extérieure (96) comprenant une pluralité d'anneaux extérieurs (26).

7. Stator (10) selon l'une quelconque des revendications précédentes, dans lequel l'anneau extérieur (26) comprend une pluralité de formations de réception de dent (89).

8. Machine électrique (72) comprenant un stator (10) selon l'une quelconque des revendications précédentes et un rotor (76).

9. Machine électrique (72) selon la revendication 8, dans laquelle une partie plus mince de chacun des ponts de matière asymétriques se situe, en cours d'utilisation, au niveau du bord d'attaque (78) des ponts de matière asymétriques respectifs (16) dans le sens de rotation du rotor (76).

10. Véhicule (84) comprenant une ou plusieurs machines électriques (72) selon la revendication 8 ou la revendication 9.

11. Procédé de fabrication d'un stator (10) comprenant :
l'estampage d'une tôle annulaire de stator (85) pour former un anneau intérieur (12) et un anneau extérieur (26), l'anneau intérieur (12) comprenant une pluralité de dents en saillie radiale (14) et une pluralité de ponts de matière (16), les dents en saillie radiale (14) et les ponts de matière (16) étant formés à partir de la même tôle, chaque dent (14) étant reliée aux dents adjacentes (14) par des ponts de matière respectifs (16) aux extrémités radialement intérieures (18) des dents (14), et étant séparée des dents adjacentes (14) par des fentes respectives (20), dans lequel les fentes (20) de l'anneau intérieur (12) sont ouvertes aux extrémités radialement extérieures (22) des dents (14) ;
dans lequel au moins certains des ponts de matière (16) sont de forme asymétrique ; et
dans lequel chaque pont de matière asymétrique (16) comprend une première partie (30) comprenant une première surface (32) à l'intérieur de la fente (20) s'étendant d'une première des dents (14-1) à une deuxième des dents (14-2), une deuxième partie (34) comprenant une deuxième surface (36) à l'intérieur de la fente (20) s'étendant de la deuxième des dents (14-2) à la première des dents (14-1), et une troisième partie (38) s'étendant de la première partie (30) à la deuxième partie (34) dans lequel la troisième partie (38) comprend une troisième surface (39) entre la première surface (32) et la deuxième surface (36), dans lequel la première surface (32) est radialement séparée de la deuxième surface (36), la première surface (32) fournissant un gradin supérieur, configuré pour supporter des enroulements en cours d'utilisation, et la deuxième surface (36) fournissant un gradin inférieur, configuré pour être séparé des enroulements en cours d'utilisation, formant ainsi un canal de refroidissement (37) dans le pont de matière asymétrique (16).

12. Procédé de fabrication d'un stator (10) selon la revendication 11, comprenant :
l'estampage de formations de réception de dents (89) dans l'anneau extérieur (26), correspondant à la forme des extrémités radialement extérieures (22) des dents (14) de l'anneau intérieur (12), les formations de réception de dents (89) étant estampées entre des formations dans l'anneau extérieur (26) qui sont formées par l'estampage des extrémités radialement extérieures (22) des dents (14) de l'anneau intérieur (12) à partir de la tôle annulaire de stator (85).

13. Procédé de fabrication d'un stator (10) selon la revendication 12, comprenant :
la jonction d'une pluralité d'anneaux intérieurs (12) les uns aux autres pour former une partie intérieure (90) du stator (10), où chacune des dents en saillie radiale (14) sur chacun des anneaux intérieurs (12) recouvre des dents en saillie radiale correspondantes (14) sur chaque anneau intérieur adjacent (12), formant des dents en saillie radiale allongées (92) et des fentes allongées (94) dans la partie intérieure (90) du stator (10) ;
l'insertion d'enroulements dans les fentes allongées (94) de la partie intérieure (90) du stator (10) ;
la jonction d'une pluralité d'anneaux extérieurs (26) les uns aux autres pour former une partie extérieure (96) du stator (10), où chacune des formations de réception de dent (89) sur chacun des anneaux extérieurs (26) recouvre des formations de réception de dent correspondantes (89) sur chaque anneau extérieur adjacent (26), formant des formations de réception de dent allongées (98) dans la partie extérieure (96) du stator (10) ; et
l'orientation de la partie intérieure (90) du stator (10) de sorte que les dents en saillie radiale allongées (92) soient positionnées dans les formations de réception de dents allongées (98) dans la partie extérieure (96) du stator (10).

14. Procédé de fabrication d'un stator (10) selon l'une quelconque des revendications 11 à 13, comprenant :
l'estampage de la tôle annulaire de stator (85) à partir d'une feuille de matériau d'acier, la tôle annulaire de stator (85) ayant une surface intérieure circulaire et une surface extérieure sensiblement circulaire.
